# EUROPÄISCHE PATENTANMELDUNG

(11) **EP 4 260 712 A1**
(43) Veröffentlichungstag der Anmeldung: **18.10.2023**
(21) Anmeldenummer: 22168388.1
(22) Anmeldetag: 14.04.2022
(51) Int. Cl.: A23L 2/38, A23L 2/66, A23J 1/00, A23J 1/12, A23J 1/16, C12C 1/00

(54) **VERFAHREN ZUM HERSTELLEN VON BIER ODER EINEM ANDEREN GETRÄNK UND EINES PROTEINHALTIGEN PRODUKTES**

(71) Anmelder: Kontor N GmbH & Co. KG, 18439 Stralsund (DE)
(72) Erfinder: Nordmann, Juergen, 18573 Rambin (DE); Nordmann, Jan Malte, 18573 Rambin (DE); Reineke-Lautenbacher, Jens, 18439 Stralsund (DE)
(74) Vertreter: Hauck Patentanwaltspartnerschaft mbB

(57) **Zusammenfassung**

Verfahren zum Herstellen von Bier oder einem anderen Getränk und eines proteinhaltigen Produktes auf der Basis von Getreide als Einsatzstoff, bei dem:
• eine Maische aus vermälztem und/oder unvermälztem Getreide hergestellt wird,
• die Maische in eine erste Stofffraktion mit geringem Feststoffgehalt und in eine zweite Stofffraktion mit hohem Feststoffgehalt fraktioniert wird,
• die erste Stofffraktion für die Herstellung von Bier oder einem anderen Getränk eingesetzt wird,
• die zweite Stofffraktion mit einem Pilzinokulat von Basidiomyceten inokuliert wird,
• die inokulierte Stofffraktion fermentiert wird und
• ein Proteine enthaltendes Pilzmycel gebildet wird.

## Beschreibung

Die Erfindung betrifft ein Verfahren zum Herstellen von Bier oder einem anderen Getränk und eines proteinhaltigen Produktes auf der Basis von Getreide als Einsatzstoff.

Beim Brauen von Bier wird zunächst aus Gerste oder anderem Getreide Malz hergestellt. Durch Mälzen werden Enzyme freigesetzt, die aus der Stärke des Korns Malzzucker für die spätere Vergärung erzeugen. Hierzu ist der Maischprozess erforderlich. Beim Maischen werden das vermälzte und geschrotete Getreide mit Brauwasser unter Rühren vermischt und erhitzt, die Stärke durch die Enzyme in Malzzucker (Malthose) umgewandelt und die Malzinhaltsstoffe als Extrakt gewonnen. Die flüssige Bierwürze wird durch Abläutern im Läuterbottich oder Maischefilter bei Temperaturen von 72 bis 80 °C von den festen Bestandteilen der Maische getrennt, dem sogenannten Biertreber. Das Hauptprodukt für die Bierherstellung ist die Bierwürze. Dieser wird gekocht und mit Hopfen versetzt, sodass sich dessen Aromastoffe lösen. Das Kochen bewirkt auch, dass die Bierwürze keimfrei wird. Nach Klärung der Bierwürze wird durch Abkühlen und Zusatz von Hefe der Gärprozess eingeleitet. Bei der Gärung wird Malzzucker in Alkohol und Kohlensäure umgewandelt. Die weitere Behandlung des bei der Bierherstellung in großen Mengen anfallenden Trebers stellt vor allem für kleine und mittelständische Brauereien ein Problem dar. Der aus dem Läuterbottich entnommene Biertreber weist eine kurze mikrobiologische Haltbarkeit von nur wenigen Tagen auf. Der Biertreber wird als Futtermittel in der Milchviehwirtschaft und der Rindermast, als Dünger, für die Strom- und Wärmegewinnung mittels Biogasanlagen und in getrocknetem Zustand für die Wärmeerzeugung durch Verbrennung in Kombination mit Holzhackschnitzeln genutzt.

Bereits bekannt ist die Produktion von Proteinen für die menschliche Ernährung mithilfe von Pilzen. So wurden beispielsweise Hefen für die Proteinherstellung eingesetzt. Unter dem Handelsnamen Quorn^{™} wird ein aus dem fermentierten Mycel des Schimmelpilzes (Ascomyceten) Fusarium venenatum hergestelltes Fleischersatzprodukt vermarktet.

In Indonesien wird durch Beimpfung gekochter Sojabohnen mit verschiedenen Rhizopus-Arten das traditionelle Fermentationsprodukt "Tempeh" erzeugt. Bei den Pilzen handelt es sich um Schimmelpilze aus der Abteilung der Jochpilze. Die fermentierte Masse wird in Stücke geschnitten, gebraten und verzehrt. Durch die Fermentation werden die Proteine der Sojabohnen aufgewertet und verdauungsschädliche Bestandteile abgebaut.

Seit einigen Jahren gibt es Bestrebungen, klassische Speisepilze aus der Klasse der Basidiomyceten für die Produktion von Proteinen und/oder Aromastoffen einzusetzen, da diese einen hohen Proteinanteil aufweisen, vielfältige Aromen ausbilden und das Pilzprotein eine hohe biologische Wertigkeit aufweist.

In einem Fachartikel ist die Herstellung von Proteinen durch Fermentation von Nebenströmen aus der Nahrungsmittelindustrie mittels Basidiomyceten beschrieben (Zorn, H. et al. Upcycling of Food Industry Side Streams by Basidiomycetes for Production of a Vegan Proteine Source, International Journal of Recycling of Organic Waste in Agriculture 2019, 8:447 - 445). Der Nährwert von Apfeltrester wurde durch Fermentation mit dem Pilz Pleurotus sapidus stark erhöht und die resultierende Biomasse wurde als geeignete alternative Proteinquelle angesehen. Der Aminosäureanteil wurde von ungefähr 5% beim Apfeltrester auf 24% beim fermentierten Apfeltrester erhöht und der fermentierte Apfeltrester wies eine hohe biologische Wertigkeit von 86 auf und hierdurch wird ein guter Nährwert für Menschen indiziert.

In einem weiteren Fachartikel (Zorn, H. et al. Characterization of the Nutritional Composition of a Biotechnologically Produced Oyster Mushroom and its Physiological Effects in Obese Zucker Rats, Mol. Nutr. Food Res. 2020, 64) sind physiologische (antisteatotische und entzündungshemmende) Effekte einer Nährstoffzusammensetzung eines biotechnologisch produzierten Austernpilzes bei Untersuchungen am Rattenmodell beschrieben.

In der WO 2013/034613 A2 ist ein Verfahren zur Herstellung eines Getränks oder einer Getränkebase beschrieben, bei dem in wenigstens einem Fermentationsprozess ein Medium fermentiert wird, das pumpbar ist, und bei dem der Fermentationprozess aerob durchgeführt wird, wobei das Medium durch Mycel von wenigstens einem Basidiomyceten fermentiert wird. Bei einem Ausführungsbeispiel wird ungehopfte Bierwürze mit dem Mycel der Basidiomyceten Ischnoderma benzoinum, Tyromyces chioneus und Wolfiporia cocos fermentiert. Das Mycel des Basidiomyceten wird durch Zentrifugieren abgetrennt und die restliche Probe sensorisch beurteilt. Es wird festgestellt, dass nach aerober Fermentation von ungehopfter Bierwürze ansprechend riechende und gut schmeckende Getränke erhalten werden, die sich deutlich von nicht fermentierter Bierwürze unterscheiden. Diese Verwendung der Bierwürze für die Getränkeherstellung konkurriert mit ihrer Verwendung für die Bierherstellung.

Davon ausgehend liegt der Erfindung die Aufgabe zugrunde, die Herstellung von Bier oder eines anderen Getränks auf der Basis von Getreide mit der Herstellung anderer Produkte mit hohem Nährwert zu kombinieren und hierbei die Ausgangsstoffe besser auszunutzen und insgesamt eine verbesserte Ökobilanz zu erzielen.

Die Aufgabe wird durch ein Verfahren zum Herstellen von Bier oder einem anderen Getränk und eines proteinhaltigen Produktes gemäß Anspruch 1 gelöst. Vorteilhafte Ausführungsarten des Verfahrens sind in Unteransprüchen angegeben.

Bei dem erfindungsgemäßen Verfahren zum Herstellen von Bier oder einem anderen Getränk und eines proteinhaltigen Produktes auf der Basis von Getreide als Einsatzstoff wird
- eine Maische aus vermälztem und/oder unvermälztem Getreide hergestellt,
- die Maische in eine erste Stofffraktion mit geringem Feststoffgehalt und in eine zweite Stofffraktion mit hohem Feststoffgehalt fraktioniert,
- die erste Stofffraktion für die Herstellung von Bier oder einem anderen Getränk eingesetzt,
- die zweite Stofffraktion mit einem Pilzinokulat von Basidiomyceten inokuliert,
- die inokulierte Stofffraktion fermentiert und
- ein Proteine enthaltendes Pilzmycel gebildet.

Mittels des erfindungsgemäßen Verfahrens wird erstmals eine Stofffraktion mit hohem Feststoffgehalt aus der Maische eines Brauprozesses oder eines anderen Verfahrens zum Herstellen von Getränken auf der Basis von Getreide für die Herstellung eines protein- und/oder aromastoffhaltigen Produktes mit Hilfe von Pilzen aus der Klasse der Basidiomyceten herangezogen. Bei den herkömmlichen Verfahren zum Herstellen von Bier oder anderen Getränken über eine Maische aus vermälztem und/oder unvermälztem Getreide wird das Getreide nur teilweise zu für den Menschen verwertbaren Stoffen verarbeitet. So bauen die beim Bierbrauen verwendeten Hefen das vermälzte Getreide nur teilweise in für den Menschen verdaubare Stoffe um. Die Erfindung macht sich zu Nutze, dass die beim Bierbrauen nicht von den Hefen verwertbaren Bestandteile wie Zellulose und Hemizellulose mit Hilfe von Basidiomyceten zu vom Menschen verdaubaren Proteinen umgewandelt werden können. Dabei ist von Vorteil, dass die dem Verfahren zugeführten Ausgangsstoffe von einer für die Herstellung von Bier oder anderen Getränken geeigneten Qualität sind, sodass sie sich grundsätzlich auch für die Herstellung von Lebensmitteln und von anderen vom Menschen zu konsumierenden Produkten eignen. Bei dem Verfahren wird die Maische in eine erste Stofffraktion mit geringem Feststoffgehalt (z.B. Bierwürze) und in eine zweite Stofffraktion mit hohem Feststoffgehalt (z.B. Biertreber) fraktioniert, die erste Stofffraktion für die Herstellung von Bier oder anderen Getränken und die zweite Stofffraktion für die Herstellung von proteinreichem Pilzmycel eingesetzt. Bei der herkömmlichen Bierherstellung wird die beim Abläutern der Bierwürze anfallende Stofffraktion mit hohem Feststoffgehalt als Biertreber in großen Silos zwischengelagert und überwiegend zur Verwendung als Tierfutter an die Agrarwirtschaft abgegeben. Die Stofffraktion mit hohem Feststoffgehalt ist jedoch aufgrund ihrer Herstellung unter Verwendung von für die Erzeugung von Nahrungsmitteln geeigneten Einsatzstoffen, ihrer stofflichen Zusammensetzung, ihres großen Mengenanteils und ihrer einheitlichen Zusammensetzung und grundsätzlich hohen Qualität besonders für die Herstellung von Proteinen für die Aufnahme durch den Menschen geeignet.

Basidiomyceten (Ständerpilze) umfassen die für den Menschen zum Verzehr geeigneten essbaren Ständerpilze. Sie verfügen über ein sehr breites biochemisches Transformationspotential und unterscheiden sich hierdurch von niederen Pilzen und Bakterien. Erfindungsgemäß wird dieses Potential dafür genutzt, Proteine mit einer hohen biologischen Wertigkeit zur Verfügung zu stellen.

Basidiomyceten sind in der Lage, proteinreiche Pilzmycele zu bilden, deren Proteine eine hohe biologische Wertigkeit aufweisen können. Untersuchungen im Rahmen der Erfindung haben gezeigt, dass mittels Basidiomyceten fermentierter Treber eine besonders hohe biologische Wertigkeit von über 90 aufweist und deshalb besonders gut vom Menschen verwertet werden kann. Die biologische Wertigkeit der Pilzproteine ist mit der von Rindfleisch vergleichbar und weitaus größer als bei pflanzlichen Proteinen oder fermentiertem Apfeltrester.

Zudem können die Fermentationsprodukte von Basidiomyceten Aromastoffe mit vielfältigen Geschmacks- und/oder Geruchsaromen enthalten, beispielsweise Aromastoffe z.B. mit Frucht-, Beeren-, Kräuter-, Gewürz-, fleischigen und/oder fischigen Aromanoten. Untersuchungen im Rahmen der Erfindung haben gezeigt, dass bei der Fermentation von Treber mittels Basidiomyceten besonders ansprechende Aromastoffe erzeugt werden.

Durch das Verfahren werden wertvolle Rohstoffe für die Herstellung von Bier oder anderen Getränken auf der Basis von Getreide zusätzlich für die Herstellung von ernährungsphysiologisch, gustatorisch und olfaktorisch besonders wirksamen und interessanten Produkten genutzt. Neben den vorgenannten vorteilhaften Effekten können mittels Basidiomyceten hergestellte protein- und/oder aromastoffhaltige Pilzmycele entzündungshemmende oder andere gesundheitsfördernde Wirkungen haben.

Untersuchungen im Rahmen der Erfindung haben ergeben, dass der Glutengehalt des mittels Basidiomyceten fermentierten Trebers stark gegenüber dem Glutengehalt des Trebers abgebaut wurde. Aufgrund von Untersuchungen über das Ausmaß der Biokonversion verschiedener Substrate durch Pilze aus der Klasse der Basidiomyceten ist zu erwarten, dass Basidiomyceten generell die Eigenschaft haben, in einem Nährsubstrat enthaltenes Gluten in erheblichem Ausmaß abzubauen.

Der CO₂-Fußabdruck der Proteinherstellung ist weitaus kleiner als bei der Fleischerzeugung. Die Ökobilanz des Gesamtverfahrens ist besser als die Gesamtbilanz der herkömmlichen Herstellung von Bier oder anderer Getränke auf der Basis von Getreide und der Herstellung von bekömmlichen Produkten, die von den protein- und/oder aromastoffhaltigen Produkten substituiert werden.

Gemäß einer Ausführungsart der Erfindung ist das Verfahren zum Herstellen von Getränken ein Brauprozess zum Herstellen von Bier, ein Brennprozess zum Herstellen von Spirituosen (insbesondere Whiskey) oder ein Verfahren zum Herstellen von Getränken unter Verwendung von Malzauszügen (Malzextrakten).

Gemäß einer Ausführungsart umfasst das Verfahren mindestens eines der folgenden Merkmale:
- Das dem Mälzereiprozess oder Maischprozess als Einsatzstoff zugeführte Getreide wird gereinigt und/oder daraus werden fehlerhafte Getreidekörner und/oder Schadstoffe und/oder Fremdstoffe aussortiert. Hierfür können mechanische Sieb-, Sortier- und/oder Entstaubungsanlagen eingesetzt werden. Ferner ist der Einsatz von optisch-elektronischen Verfahren zur Aussortierung einzelner fehlerhafter Getreidekörner möglich. Hierbei können mittels hochauflösender Kameratechnik und gegebenenfalls automatischer Bildauswertung schadhafte Körner sicher erkannt und einzeln mittels gezielter Druckstöße aussortiert werden. Hierdurch werden sichere Lebensmittel ermöglicht, da Fremdkornbesatz (z.B. Mutterkorn) und Schimmel (Mykotoxinbelastung) eliminiert werden können. Ferner kann das Getreidekorn noch vor dem eigentlichen Einweichen durch Einsatz spezieller Waschschnecken gereinigt werden.
- Dem Mälzereiprozess oder Maischprozess wird nach vorgegebenen Kriterien vereinheitlichtes (homogenisiertes) Getreide als Einsatzstoff zugeführt. Die Kriterien der Vereinheitlichung können beispielsweise die Korngrößen, die Getreidesorten (Gerste, Weizen, Roggen), die Mischungsverhältnisse verschiedener Getreidesorten des zugeführten Getreides betreffen.
- Für den Anbau des dem Mälzereiprozess oder Maischprozess als Einsatzstoff zugeführten Getreides wird spezifiziertes Saatgut verwendet. Das Saatgut kann insbesondere durch eine eingetragene Sortenbezeichnung identifiziert werden. Gentechnisch verändertes Saatgut kann ausgeschlossen werden.
- Dem Mälzereiprozess oder Maischprozess wird Getreide einer oder mehrerer spezifizierter Sorten als Einsatzstoff zugeführt.
- Der Anbau des dem Mälzereiprozess oder Maischprozess zugeführten Getreides wird nach spezifizierten Vorgaben (z.B. betreffend Region, Bodenpflege, Aussaat, Düngung, Pflanzenschutz, Ernte, Maschineneinsatz) durchgeführt.
- Dem Mälzereiprozess oder Maischprozess wird nach den Richtlinien des neutral kontrollierten Vertragsanbaus (KVA) erzeugts Getreide oder nach den Vorschriften für den ökologischen Anbau erzeugtes Getreide (Biogetreide) als Einsatzstoff zugeführt. Die Kriterien des neutral kontrollierten Vertragsanbaus basieren auf den Grundsätzen des integrierten Pflanzenanbaus. Insbesondere für Getreide wurden spezielle Qualitäts- und Erzeugungsregeln entwickelt, deren Einhaltung die an der KVA teilnehmenden Betriebe gewährleisten müssen. Beim neutral kontrollierten Vertragsanbau gelten diese Kriterien als Mindeststandards, auf die durch den Abschluss von Verträgen zwischen Erzeugern und abnehmender Hand höhere Standards aufgesattelt werden können. Die EU-Rechtsvorschriften für den ökologischen Landbau umfassen die Öko-Basisverordnung (Verordnung (EG) Nr. 834/2007 des Rates vom 28. Juni 2007) sowie die Durchführungsvorschriften (Verordnung (EG) Nr. 889/2008 und Verordnung (EG) Nr. 1235/2008). Ab dem 1. Januar 2022 gilt in der gesamten Europäischen Union die Verordnung EU 2018/848 als neue Rechtsvorschrift für den ökologischen Landbau. Zusätzlich zu der Basisverordnung werden sogenannte Durchführungsrechtsakte erlassen. Produkte, die den Rechtsvorschriften der Europäischen Union für den ökologischen Landbau entsprechen, dürfen Bezeichnungen wie "biologisch", "Bio", "ökologisch" und "Öko" tragen.
- Dem Mälzereiprozess oder Maischprozess wird ohne Einsatz von synthetischem Stickstoffdünger oder chemisch aufbereitetem Mineraldünger oder synthetischer Pflanzenschutzmittel angebautes Getreide als Einsatzstoff zugeführt.
- Herkunft, Lieferweg, Anbau, Verarbeitung und/oder Eigenschaft des verwendeten Saatgutes und/oder des Anbaus und/oder des zugeführten Getreides werden überwacht.
- Die Eigenschaften (beispielsweise Getreidesorten, Korngrößen, Mischungsverhältnisse) des dem Mälzereiprozess oder Maischprozess zugeführten Getreides werden überwacht.
- Die Eigenschaften des dem Maischprozess als Einsatzstoff zugeführten vermälzten und geschroteten Getreides werden überwacht.
- Die Eigenschaften der für die Herstellung des proteinhaltigen Pilzmycels eingesetzten Stofffraktion werden überwacht.
- Die Eigenschaften des hergestellten proteinhaltigen Pilzmycels werden überwacht.
- Die Überwachung umfasst die Probennahme, Analysieren von Proben, Auswertung von Analysen, Qualifizierung von Proben und/oder Eingriff in den Prozess (insbesondere mit dem Ziel der Einhaltung von Vorgaben).

Durch die Vorgaben an den verwendeten Einsatzstoff, die Reinigung des Einsatzstoffes und das Aussortieren unerwünschter Bestandteile können insbesondere Pestizide, Fungizide, Herbizide, Mykotoxine (Schimmelpilzgifte), Schwermetalle und andere Schadstoffe in den Produkten vermieden werden.

Aufgrund der Vereinheitlichung der Zusammensetzung und Qualität der dem Verfahren zugeführten Einsatzstoffe und/oder der dem Mälzereiprozess oder dem Maischen zugeführten Zwischenprodukte kann erreicht werden, dass die Fermentation unter Bedingungen stattfindet, die besonders gut für die Verwertung der Stofffraktion durch Basidiomyceten und die Herstellung des Proteine- und/oder Aromastoffe enthaltenden Pilzmycels sind. Hierdurch kann auch eine einheitliche Zusammensetzung und hohe Qualität des Produktes erreicht werden. Hierdurch kann Aufwand für die Analyse des Produktes eingespart werden. Das Produkt ist besonders für die Erzeugung von proteinhaltigen Erzeugnissen für Ernährungszwecke geeignet.

Für die Herstellung von Proteinen wird gemäß einer weiteren Ausführungsart ausschließlich oder im Wesentlichen die Stofffraktion mit hohem Feststoffgehalt verwendet. In der Regel weist unter den für die Herstellung von Proteinen geeigneten Stofffraktionen bei der Herstellung von Bier oder anderen Getränken auf der Basis von Getreide die beim Maischen anfallende Stofffraktion mit dem hohen Feststoffgehalt den größten Anteil auf, sodass ihre Biokonversion zu proteinhaltigem Pilzmycel besonders effizient ist. Für die Herstellung von Proteinen können zusätzlich weitere Stofffraktionen aus der Getränkeherstellung verwendet werden.

Gemäß einer weiteren Ausführungsart wird für die Herstellung von Proteinen vermälztes und/oder unvermälztes Getreide aus dem Mälzereiprozess eingesetzt. Beispielsweise können Überschussmengen von vermälztem und/oder unvermälztem Getreide eingesetzt werden.

Gemäß einer weiteren Ausführungsart wird für die Herstellung von Proteinen zusätzlich mindestens eine der Stofffraktionen Bierhefe oder Prozessbier aus der Bierherstellung oder Schlempe aus der Destillation von Spirituosen oder Prozesswasser aus einer Getränkeproduktion eingesetzt. Die hierfür eingesetzte Bierhefe ist beispielsweise überschüssige Hefe oder Althefe und das hierfür eingesetzte Prozessbier ist beispielsweise verdünnte Würze oder verdünntes Bier.

Gemäß einer weiteren Ausführungsart werden der Mälzereiprozess und die nachfolgenden Schritte des Brauprozesses oder anderen Verfahrens zum Herstellen von Getränken Inline durchgeführt. Hierbei sind der Mälzereiprozess und die nachfolgenden Schritte des Brauprozesses oder anderen Verfahrens zum Herstellen von Getränken zu einem zusammenhängenden Produktionsprozess fortlaufend miteinander verbunden. Anlagentechnisch wird dies insbesondere durch physische Verbindung der Anlagenteile für die Durchführung des Mälzereiprozesses mit den Anlagenteilen für die Durchführung der nachfolgenden Schritte des Brauprozesses oder anderen Verfahrens zum Herstellen von Getränken über Leitungen und/oder kontinuierlich oder intermittierend arbeitende Fördersysteme zu einer einheitlichen Gesamtanlage verwirklicht. Vorzugsweise weist die Gesamtanlage ein einheitliches Prozessleitsystem auf.

Gemäß einer weiteren Ausführungsart werden der Brauprozess oder ein anderes Verfahren zum Herstellen von Getränken und die Herstellung von Proteinen Inline durchgeführt. Hierbei sind der Brauprozess oder ein anderes Verfahren zum Herstellen von Getränken und die Herstellung von Proteinen zu einem zusammenhängenden Produktionsprozess fortlaufend miteinander verbunden. Anlagentechnisch wird dies insbesondere durch physische Verbindung der Anlagenteile für die Durchführung des Brauprozesses oder anderen Verfahrens zum Herstellen von Getränken mit den Anlagenteilen für die Herstellung von Proteinen über Leitungen und/oder kontinuierlich oder intermittierend arbeitende Fördersysteme zu einer Gesamtanlage verwirklicht. Vorzugsweise weist die Gesamtanlage ein einheitliches Prozessleitsystem auf.

Gemäß einer weiteren Ausführungsart ist das Verfahren nach dem Maischen in zwei parallele Stränge aufgeteilt, wobei dem einen Strang die beim Maischen abgeläuterte Würze oder andere Stofffraktion mit geringem Feststoffanteil zugeführt wird und dem anderen Strang die Stofffraktion mit hohem Feststoffanteil zugeführt wird. Bis zum Maischen ist das Verfahren der Herstellung von Bier oder eines anderen Getränks und eines proteinhaltigen Produktes dasselbe. Nach dem Maischen wird in dem einen Strang aus der Stofffraktion mit geringem Feststoffanteil Bier oder ein anderes Getränk hergestellt und in dem anderen Strang aus der Stofffraktion mit erhöhtem Feststoffanteil das Proteine enthaltende Pilzmycel.

Gemäß einer weiteren Ausführungsart ist ein Auslass für die Stofffraktion mit hohem Feststoffgehalt des Maischbottichs bzw. einer Einrichtung zum Abläutern der flüssigen Bierwürze oder anderen ersten Stofffraktion von den festen Bestandteilen der Maische über eine Leitung mit einem Silo verbunden, um die Stofffraktion mit erhöhtem Feststoffgehalt zwischenzuspeichern bzw. zu puffern. Gemäß einer weiteren Ausführungsart ist das Silo über eine weitere Leitung mit einem Fermenter verbunden, in dem die Fermentation durchgeführt wird. Gemäß einer weiteren Ausführungsart sind die Leitungen mit Ventilen und/oder Pumpen versehen, um die Stofffraktion mit erhöhtem Feststoffgehalt nach Anfall und Bedarf aus dem Maischbottich in das Silo und aus dem Silo in den Fermenter zu transportieren.

Gemäß einer weiteren Ausführungsart wird die Stofffraktion mit hohem Feststoffgehalt nach dem Abläutern der flüssigen Bierwürze mittels Lkw, Eisenbahn, Schiff oder eines anderen Transportfahrzeuges zur Fermentation an einen mehr oder weniger entfernten Ort transportiert. Gemäß einer weiteren Ausführungsart wird die Stofffraktion mit hohem Feststoffgehalt mittels Lkw mit (Sattel-) Auflieger transportiert. Gemäß einer weiteren Ausführungsart wird die Stofffraktion mit hohem Feststoffgehalt mittels Tankwagen transportiert. Gemäß einer weiteren Ausführungsart wird das Transportfahrzeug direkt mit der aus dem Läuterbottich entnommenen Stofffraktion mit hohem Feststoffgehalt befüllt oder wird diese Stofffraktion in einem Silo zwischengespeichert und das Transportfahrzeug nach dem Zwischenspeichern mit der Stofffraktion befüllt.

Gemäß einer weiteren Ausführungsart wird die für die Herstellung von Proteinen eingesetzte Stofffraktion mit Wasser verdünnt. Durch Verdünnen mit Wasser kann die Stofffraktion fließ- und pumpfähig und in einen für eine Fermentation in einer Submerskultur geeigneten Zustand gebracht werden. Dies gilt insbesondere für die Vorbereitung der Stofffraktion mit hohem Feststoffgehalt aus der Maische und/oder für die Vorbereitung von vermälztem und/oder unvermälztem Getreide aus dem Mälzereiprozess für die Fermentation.

Gemäß einer weiteren Ausführungsart wird die für die Herstellung von Proteinen eingesetzte Stofffraktion frisch verarbeitet und/oder mikrobiologisch stabilisiert bzw. technisch steril gemacht. Die Stofffraktion gilt dann als frisch verarbeitet und/oder mikrobiologisch stabilisiert bzw. technisch steril, wenn sich nach dem Abtrennen der Stofffraktion von der Maische keine pathogenen Mikroorganismen in der Stofffraktion anreichern. Der in dem Läuterbottich anfallende Biertreber kann als technisch steril bezeichnet werden. Durch die mikrobiologische Stabilisierung können sich Mikroorganismen, die im Hinblick auf eine Temperatur von maximal 78° beim Maischen nicht völlig ausgeschlossen werden können, im weiteren Verfahren nicht anreichern und das Produkt verunreinigen. Hingegen ist der beim herkömmlichen Bierbrauen anfallende Treber infolge der Lagerung in großen Silos reich an Mikroorganismen und eine Anreicherung von Pathogenen ist nicht auszuschließen, sodass der Treber nicht den hygienischen Anforderungen für eine Verarbeitung zu einem Lebensmittel genügt.

Gemäß einer weiteren Ausführungsart wird die für die Herstellung von Proteinen eingesetzte Stofffraktion durch mindestens eine der folgenden Maßnahmen frisch verarbeitet und/oder mikrobiologisch stabilisiert: durch kurze Verweilzeiten vom Anfallen bis zum Fermentieren der Stofffraktion (vorzugsweise von höchstens 24 Stunden, weiterhin vorzugsweise höchstens 12 Stunden, weiterhin vorzugsweise höchstens 4 Stunden), durch eine Nacherhitzung auf mindestens 80 °C, durch Herunterkühlen auf eine Temperatur unter 30°C, durch Zusetzen von Säure, vorzugsweise von Milchsäure, vorzugsweise von Milchsäure aus dem Brauprozess oder anderen Verfahren zum Herstellen von Lebensmitteln, durch Einsatz von Basidiomyceten, die antimikrobielle Verbindungen bilden durch regelmäßiges, vorzugsweise mindestens tägliches, Entleeren, Reinigen und Sterilisieren der Anlagenteile einer Produktionsanlage zur Durchführung des Verfahrens bzw. eines Transportfahrzeuges zum Transportieren der Stofffraktion (z. B. Silos, Leitungen, Förderschnecken, Tanks), durch die die Stofffraktion hindurch geführt und/oder in denen sie gelagert wird.

Kurze Verweilzeiten können insbesondere dadurch erreicht werden, dass der Brauprozess oder ein anderes Verfahren zum Herstellen von Getränken und die Herstellung von Proteinen inline durchgeführt werden. Falls die Stofffraktion mit hohem Feststoffgehalt nach der Entnahme aus dem Läuterbottich mittels eines Transportfahrzeuges zum Ort der Fermentation transportiert wird, kann die Verweilzeit insbesondere durch direktes Einfüllen der Stofffraktion in das Transportfahrzeug oder Einfüllen nach kurzer Zwischenlagerung in das Transportfahrzeug und/oder kurze zeitliche Taktung der Transporte mittels des Transportfahrzeuges kurz gehalten werden. Eine mikrobiologische Stabilisierung durch Nacherhitzung und/oder durch Herunterkühlen der Stofffraktion mit hohem Feststoffgehalt kann insbesondere während einer Zwischenlagerung in einem Silo und/oder in einem Tank eines Transportfahrzeuges erfolgen. Hierfür können Anlagenteile einer Produktionsanlage bzw. eines Transportfahrzeuges entsprechend beheizt und/oder gekühlt werden und/oder kann die Stofffraktion mit erhitztem und/oder gekühltem Wasser temperiert und verdünnt werden. Die hygienischen Anforderungen an die mikrobiologische Stabilisierung der Stofffraktion mit hohem Feststoffanteil ergeben sich aus dem Lebensmittel- und Futtermittelgesetzbuch (LFGB) in der Fassung der Bekanntmachung vom 15. September 2021. Der Transport der Stofffraktion durch Transportfahrzeuge entsprechend den Hygiene-Anforderungen kann von einer zertifizierten Qualitätssicherung betreut werden.

Gemäß einer weiteren Ausführungsart wird die für die Herstellung von Proteinen eingesetzte Stofffraktion zerkleinert, vorzugsweise bevor sie mit Wasser verdünnt wird. Hierdurch wird eine größere Angriffsfläche für die Basidiomyceten geschaffen und die Geschwindigkeit der Biokonversion der eingesetzten Stofffraktion zu Proteine und/oder Aromastoffe enthaltendem Pilzmycel gesteigert.

Gemäß einer weiteren Ausführungsart wird die für die Herstellung von Proteinen eingesetzte Stofffraktion vor der Fermentation homogenisiert. Hierdurch werden einheitliche und reproduzierbare Bedingungen für die Fermentation gefördert, sodass optimale Bedingungen eingehalten werden können und die Geschwindigkeit der Biokonversion gesteigert werden kann.

Gemäß einer weiteren Ausführungsart wird die für die Herstellung von Proteinen eingesetzte Stofffraktion durch Zugabe von Wasser mit einer Temperatur unter 30° verdünnt und gekühlt. Durch die Wasserzugabe kann zugleich der Wassergehalt der Stofffraktion und eine optimale Temperatur für die Fermentation eingestellt werden. Zudem kann die Stofffraktion durch Herunterkühlen mikrobiologisch stabilisiert werden.

Gemäß einer weiteren Ausführungsart wird die zu fermentierende Stofffraktion vor dem Einspeisen in den Fermenter mit dem Inokulat gemischt. Das Mischen mit dem Inokulat kann vor, beim oder nach dem Mischen der zu fermentierenden Stofffraktion mit Wasser erfolgen.

Gemäß einer weiteren Ausführungsart wird das Inokulat gesondert von der zu fermentierenden Stofffraktion in den Fermenter eingespeist und in dem Fermenter mit der zu fermentierenden Stofffraktion gemischt.

Gemäß einer weiteren Ausführungsart wird die inokulierte Stofffraktion in einer Submerskultur fermentiert. Hierbei wird die Fermentation innerhalb der Dispersion aus der eingesetzten Stofffraktion und dem Inokulat in der wässrigen Phase durchgeführt. Diese Submersfermentation ist vorteilhaft für die Kombination mit einem Brauprozess, weil dieser im industriellen Maßstab überwiegend mit flüssigen bzw. pumpfähigen Medien in Misch-, Reaktions- und Lagerbehältern und diese verbindenden Rohrleitungen und Pumpen und/oder sonstige Fördereinrichtungen durchgeführt wird. Alternativ wird die inokulierte Stofffraktion emers fermentiert.

Gemäß einer weiteren Ausführungsart wird der Fermenter diskontinuierlich, kontinuierlich oder im Fed-Batch-Prozess betrieben. Beim Fed-Batch-Prozess wird das Reaktionsgefäß (bzw. der Fermenter) anfänglich nur teilweise mit den Ausgangsstoffen befüllt und während der Reaktion der Ausgangsstoffe zu den Produkten wird das Reaktionsgefäß durch weitere Hinzufügung von Ausgangsstoffen weiter gefüllt, um eine zu starke Absenkung der Ausgangsstoffe zu vermeiden. Hierbei kann versucht werden, die Konzentration der Edukte im Reaktor konstant zu halten. Schließlich wird das Reaktionsgefäß geleert und werden die Produkte ggfs. einer weiteren Verarbeitung zugeführt. Bei dem vorliegenden Verfahren kann der Fermenter zunächst teilweise mit der zu fermentierenden Stofffraktion, dem Inokulat und Wasser befüllt werden und während der Reaktion die zu fermentierende Stofffraktion und Inokulat nachgefüttert werden.

Gemäß einer weiteren Ausführungsart wird während der Fermentation die Fermentationsbrühe gerührt und/oder umgepumpt. Durch Rühren und/oder Umpumpen wird die aus der inokulierten Stofffraktion und die wässrige Phase gebildete Fermentationsbrühe homogenisiert und die Einhaltung optimaler Bedingungen für die Fermentation gefördert.

Gemäß einer weiteren Ausführungsart wird die Fermentation bei einer Temperatur zwischen 18°C und 30°C, vorzugsweise zwischen 20°C und 26°C, durchgeführt. Dieser Temperaturbereich ist meistens für die Fermentation mittels Basidiomyceten optimal.

Gemäß einer weiteren Ausführungsart wird die Substratzusammensetzung bei der Fermentation so eingestellt, dass der C-Gehalt 4 bis 20 g/l, der N-Gehalt 0,5 bis 5 g/l und/oder das C/N-Verhältnis ca. 10 bis 40 beträgt. Durch Einhaltung dieser Parameter wird der Nährstoffbedarf der Basidiomyceten in der Regel gedeckt.

Gemäß einer weiteren Ausführungsart wird das Proteine enthaltende Pilzmycel aus der bei der Fermentation gebildeten Pilzmaische abgetrennt. Hierdurch wird das Produkt entwässert und die Proteine und/oder Aromastoffe angereichert.

Gemäß einer weiteren Ausführungsart wird das Pilzmycel durch Filtrierung, Dekantieren, Zentrifugieren oder Abscheiden von der Pilzmaische abgetrennt.

Gemäß einer weiteren Ausführungsart wird das Proteine enthaltende Pilzmycel als Endprodukt verwendet, beispielsweise als Lebensmittel oder Nutraceutical, d.h. als Lebensmittel mit pharmazeutischem Zusatznutzen.

Gemäß einer weiteren Ausführungsart werden die Proteine und/oder Aromastoffe zumindest teilweise vom Pilzmycel abgetrennt, vorzugsweise durch Extraktion. Die abgetrennten Stoffe werden beispielsweise direkt als Endprodukt verwendet oder mit anderen Stoffen zu Endprodukten verarbeitet.

Gemäß einer weiteren Ausführungsart werden beim Brauprozess und/oder beim Herstellungsprozess für Pilzmycel anfallende Reststoffe, gegebenenfalls nach einer Aufbereitung, einem vorangehenden Verfahrensschritt zugeführt. Die Reststoffe können insbesondere als zu fermentierende Stofffraktion eingesetzt werden oder als Düngemittel beim Anbau des Getreides. Die Reststoffe können auch in einer Biogasanlage eingesetzt werden. Der Gärrest der Biogasanlage kann als Düngemittel für den Anbau von Getreide verwendet werden.

Gemäß einer weiteren Ausführungsart wird das Pilzmycel zu einem Lebensmittel, Nutraceutical, Genussmittel, Futtermittel oder Arzneimittel verarbeitet.

Gemäß einer weiteren Ausführungsart werden die Proteine und/oder Aromastoffe aus dem Pilzmycel extrahiert und zu einem Lebensmittel, Nutraceutical, Genussmittel oder Arzneimittel verarbeitet.

Gemäß einer Ausführungsart ist der Ständerpilz ausgewählt aus der nachfolgenden Gruppe von Pilzen: *Pleurotus eryngii, Pholiota nameko, Cyclocybe aegerita.*

Mit diesen Basidiomyceten können Proteinmischungen mit hoher biologischer Wertigkeit, attraktiven Aromaprofilen und geringen Glutenanteilen erreicht werden.

Gemäß einer weiteren Ausführungsart weist die Mischung von Proteinen eine biologische Wertigkeit von mindestens 94, vorzugsweise mindestens 97 auf.

Gemäß einer weiteren Ausführungsart enthält die Mischung von Proteinen mindestens einen Aromastoff oder Mischung von Aromastoffen, der mindestens eine Verbindung enthält, die aus der Stoffklasse der Terpene (z.B. Linalool, Linaloooxid, (*E*)-Nerolidol), der Carbonyle (z.B. 1-Octen-3-on, Zimtaldehyd), der Lactone (z.B. gamma-Nonalacton) und der Alkohole (z.B. 1-Hexanol, 2-Methyl-3-buten-2-ol) ausgewählt ist.

Gemäß einer weiteren Ausführungsart ist der Ständerpilz ausgewählt aus einer Gruppe von Ständerpilzen mit der Eigenschaft, den Glutenanteil des Nährmediums um mindestens 90% abzubauen.

Gemäß einer weiteren Ausführungsart weist die Mischung von Proteinen einen Gliadingehalt von maximal 0,5 g/100 g auf. Messungen haben ergeben, dass der Gliadingehalt des Trebers durch die Fermentation stark abgebaut wurde. Erreicht wurde ein Glutenabbau von über 98% bezogen auf die Trockenmasse. Durch Verarbeitung der Proteinmischung in einer Lebensmittelzusammensetzung ist es möglich, den Grenzwert für Glutenfreiheit von 20 mg/kg zu unterschreiten. Es ist zu erwarten, dass durch Optimierung des Herstellungsverfahrens der Glutenabbau noch gesteigert werden kann.

Gemäß einer weiteren Ausführungsart besteht das Medium aus Treber oder im Wesentlichen aus Treber. In der Regel weist unter den für die Herstellung von Proteinen und/oder Aromastoffen geeigneten Stofffraktionen bei der Herstellung von Bier oder anderen Getränken auf der Basis von Getreide die beim Maischen anfallende Stofffraktion mit dem hohen Feststoffgehalt (Treber) den größten Anteil auf, sodass ihre Biokonversion zu protein- und/oder aromastoffhaltigem Pilzmycel besonders effizient ist. Für die Umsetzung zu einer Proteinmischung können aber auch weitere Stofffraktionen aus der Getränkeherstellung zusätzlich verwendet werden.

Gemäß einer weiteren Ausführungsart umfasst das Nährmedium neben dem Biertreber einen weiteren Nebenstrom aus einem Verfahren der Herstellung von Bier oder eines anderen Getränks. Gemäß einer weiteren Ausführungsart wird zusätzlich vermälztes und/oder unvermälztes Getreide aus dem Mälzereiprozess für die Proteinherstellung eingesetzt. Beispielsweise können Überschussmengen von vermälztem und/oder unvermälztem Getreide eingesetzt werden.

Gemäß einer weiteren Ausführungsart wird für die Herstellung der Proteinmischung zusätzlich mindestens eine der Stofffraktionen Bierhefe, Prozessbier, Schlempe oder Prozesswasser eingesetzt. Die hierfür eingesetzte Bierhefe ist beispielsweise überschüssige Hefe oder Althefe und das hierfür eingesetzte Prozessbier ist beispielsweise verdünnte Würze oder verdünntes Bier.

Gemäß einer weiteren Ausführungsart wird die Umsetzung in einer Submers-Kultur durchgeführt. Hierbei wird die Fermentation innerhalb der Dispersion aus der eingesetzten Stofffraktion und dem Inokulat in der wässrigen Phase durchgeführt. Diese Submers-Fermentation ist vorteilhaft für die Kombination mit einem Brauprozess, weil dieser im industriellen Maßstab überwiegend mit flüssigen bzw. pumpfähigen Medien in Misch-, Reaktions- und Lagerbehältern und diese verbindenden Rohrleitungen, in Pumpen und sonstigen Fördereinrichtungen durchgeführt wird. Alternativ wird das inokulierte Nährmedium emers fermentiert.

Gemäß einer weiteren Ausführungsart wird das Nährmedium vor der Umsetzung mit Wasser verdünnt, vorzugsweise mit Prozesswasser aus der Herstellung des Getränks. Hierdurch wird die Pumpfähigkeit des Nährmediums verbessert und das Prozesswasser kann einer Verwertung zugeführt werden.

Gemäß einer weiteren Ausführungsart wird das Proteine und/oder Aromastoffe enthaltende Pilzmycel als Endprodukt verwendet, beispielsweise als Lebensmittel oder Nutraceutical, d.h. als Lebensmittel mit pharmazeutischem Zusatznutzen.

Gemäß einer weiteren Ausführungsart werden die Proteine zumindest teilweise vom Pilzmycel abgetrennt, vorzugsweise durch Extraktion. Die abgetrennten Stoffe werden beispielsweise direkt als Endprodukt verwendet oder mit anderen Stoffen zu Endprodukten verarbeitet.

Ferner betrifft die Erfindung eine proteinreiche Zusammensetzung herstellbar nach dem Verfahren eines der vorhergehenden Ansprüche. Der Zusammensetzung kommen die zu dem Verfahren angegebenen Vorteile entsprechend zu. Dies gilt auch für die nachfolgenden Ausführungsarten der Zusammensetzung.

Gemäß einer weiteren Ausführungsart weist die Zusammensetzung eine biologische Wertigkeit von mindestens 94, vorzugsweise von mindestens 97 auf.

Gemäß einer weiteren Ausführungsart umfasst die Zusammensetzung einen Aromastoff oder eine Mischung von Aromastoffen, die zumindest eine Verbindung enthält, die aus der Stoffklasse der Terpene (z.B. Linalool, Linaloooxid, (*E*)-Nerolidol), der Carbonyle (z.B. 1-Octen-3-on, Zimtaldehyd), der Lactone (z.B. gamma-Nonalacton) und der Alkohole (z.B. 1-Hexanol, 2-Methyl-3-buten-2-ol) ausgewählt ist ausgewählt ist.

Gemäß einer weiteren Ausführungsart enthält die Zusammensetzung maximal 0,5 g/100 g Gliadin.

Ferner betrifft die Erfindung eine der Ernährung, dem Genuss oder der Gesundheitsförderung dienende Zubereitung umfassend oder bestehend aus einer Zusammensetzung einer der vorbeschriebenen Arten. Der Zubereitung kommen die für die Zusammensetzung beschriebenen vorteilhaften Wirkungen entsprechend zu. Die biologische Wertigkeit, die Aromastoffe und der Gliadingehalt der Zubereitung setzen sich aus den Werten der Zusammensetzung und gegebenenfalls weiterer Komponenten der Zubereitung zusammen.

Ferner betrifft die Erfindung die Verwendung einer Zusammensetzung als eine der vorbeschriebenen Arten in einer der Ernährung, dem Genuss oder der Gesundheitsförderung dienenden Zubereitung, vorzugsweise als Protein- oder Aromastoffmischung. Der Verwendung kommen die für die Zubereitung beschriebenen Vorteile entsprechend zu.

Gemäß einer bevorzugten Ausführungsart wird die Zusammensetzung zur Herstellung eines Fleischersatzproduktes verwendet.

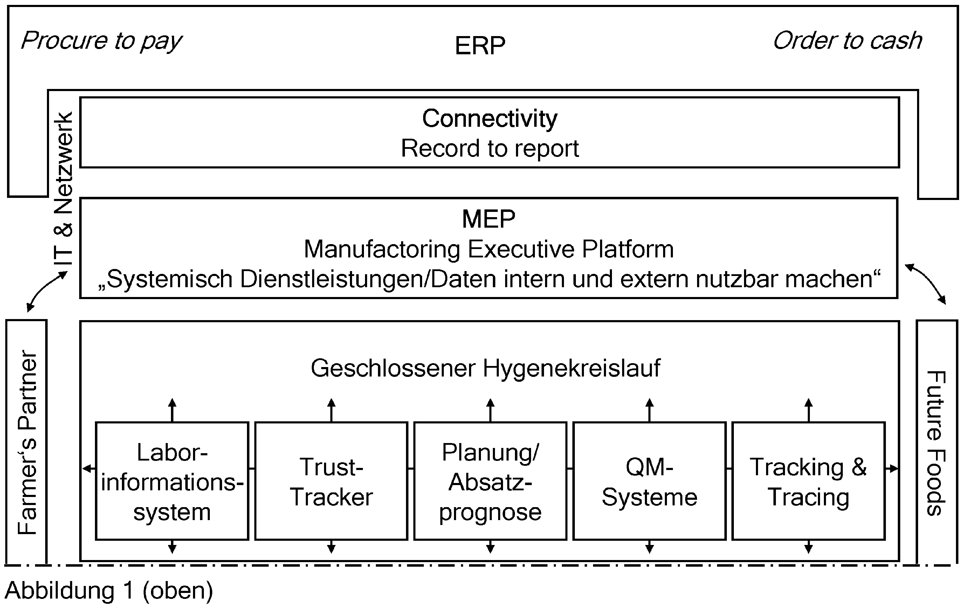

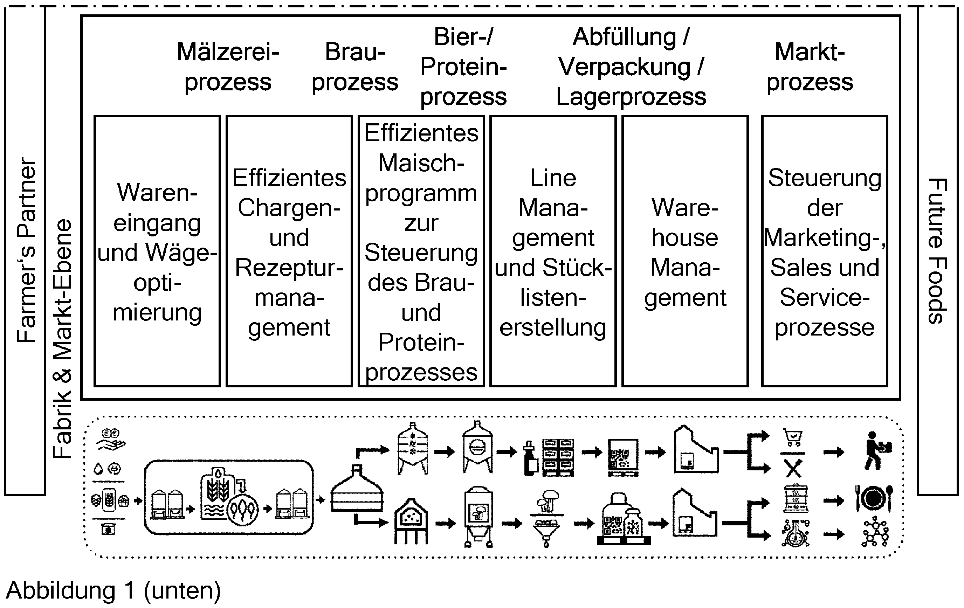

Die Erfindung wird nachfolgend anhand der anliegenden Zeichnung (Abb. 1) näher erläutert, die ein Ausführungsbeispiel in einem vereinfachten Prozessschaubild zeigt.

Gemäß dem unteren Teil des Schaubildes beginnen das Bierbrauen und die Proteingewinnung mit dem Keimen von Gerste oder einem anderen Getreide und ihrer Umwandlung in enzymhaltiges Malz.

Das Malz wird danach zerkleinert und mit warmem Wasser vermischt. Diese Maische wird in einen Maischbottich eingefüllt. Hier entstehen innerhalb weniger Stunden aus der in den Malzkörnern gespeicherten Getreidestärke durch die Wirkung von Stärke abbauenden Enzymen (Amylasen), Malzzucker (Maltose), Traubenzucker (Glucose) und andere Zucker. Zellwandabbauende Enzyme (Cellulasen) bauen die äußeren Hüllen der Gerstenkörner ab, damit die Amylase die Stärke im Sameninneren angreifen kann.

Anschließend werden die festen Bestandteile der Maische (Stofffraktion mit erhöhtem Feststoffgehalt) abgefiltert und als Substrat für den sich anschließenden Prozess der Produktion eines Pilzmycels durch Fermentation mittels Basidiomyceten in einem Fermenter genutzt.

Der flüssige süße Anteil der Maische (Bierwürze) wird in einen Braukessel eingebracht. Dabei wird Hopfen zugesetzt. Dieser verleiht dem Bier den würzigbitteren Geschmack. Die so entstehende Würze füllt der Brauer in einen Gärbottich und setzt (Brauerei-) Hefe hinzu. Dann beginnt die alkoholische Gärung. Nach der Gärung lagert das Bier zur Reifung einige Zeit in Tanks und anschließend wird es in Flaschen und Fässern abgefüllt. Darin gelangt es über den Handel oder die Gastronomie zum Kunden.

Die gewonnenen Prozessdaten werden gemäß dem oberen Teil des Prozessschaubildes sowohl aus der Bier- und Proteinherstellung in Echtzeit an unterschiedliche MES-Systeme weitergeleitet. Hierzu zählen ein Laborinformations-System, diverse Qualitätsmanagementsysteme, ein Tracking- und Tracing-System und auch ein Trust Center.

Der Einsatz einer lückenlosen Tracking und Tracing-Technologie und eines systemischen Laborinformationssystems dient der Bierherstellung und der Gewinnung von Proteinen und/oder Aromastoffen dem Schutz autorisierter Marktteilnehmer und auch als Qualitätsmaßstab für Verbraucher. Der Trust Tracker wird plattformtechnologisch aufgebaut.

Der Gesamtprozess teilt sich in Teilprozesse auf, die im Folgenden skizziert werden:
- Die spezifische Getreidecharge eines Landwirts ist als kleinstes Los in sämtlichen betrieblichen Vorgängen identifizierbar.
- Die spezifische Getreidecharge eines Landwirts wird im Wareneingang aufgrund einer Barcode-Kennzeichnung direkt in ein ERP-System verbucht und
- eindeutig nach einer Eingangskontrolle einem Getreidesilo zugeordnet.
- Nur aus einem Getreidesilo wird Ware entnommen, um spezifische Malzprozesse durchzuführen.
- Diese Malzchargen aus einem Getreidesilo werden nach dem Malzprozess in einem Malzsilo gelagert.
- Malz aus einem Malzsilo wird dem Brauprozess anhand von Sudplänen zugeführt und anhand von Rezepturen in ein Maischgefäß transportiert.
- Am Ende eines Maischvorgangs wird die Bierwürze vom Treber extrahiert von einer Ausgangsrezeptur auf zwei Rezepturen aufgeteilt und fortgeschrieben.
- Der spezifische Treber dient den Pilzen als Substrat, mit dem im Fermentationsprozess Proteinmasse erzeugt wird.

Die Inhalte einer Lieferung lassen sich jeweils eindeutig identifizieren.

Mithilfe einer bereichsübergreifenden Softwarelösung lassen sich interne und externe Daten aus unterschiedlichen Datenquellen und Datentypen in einer konfigurierbaren Plattform in Echtzeit anbinden. Dies gilt sowohl für verschiedene Bierspezialitäten als auch für pflanzliche Lebensmittel.

Die Verbesserung der Produkttransparenz beider Lebensmittel in der gesamten Lieferkette führt
- zur Sicherung der Integrität der speziellen Biersorten und pflanzlichen Lebensmittel,
- zur Sicherung der Nachverfolgbarkeit auf allen Aggregatsebenen,
- zur Erweiterung des horizontalen Wertschöpfungsprozesses in Brauereien um den vorgelagerten Malzprozess,
- zur Erweiterung der Qualitätsmanagementsysteme,
- zu erweiterten Analysemöglichkeiten von Betriebsdaten und damit zu kontinuierlichen Verbesserungs- und Effizienzprozessen.

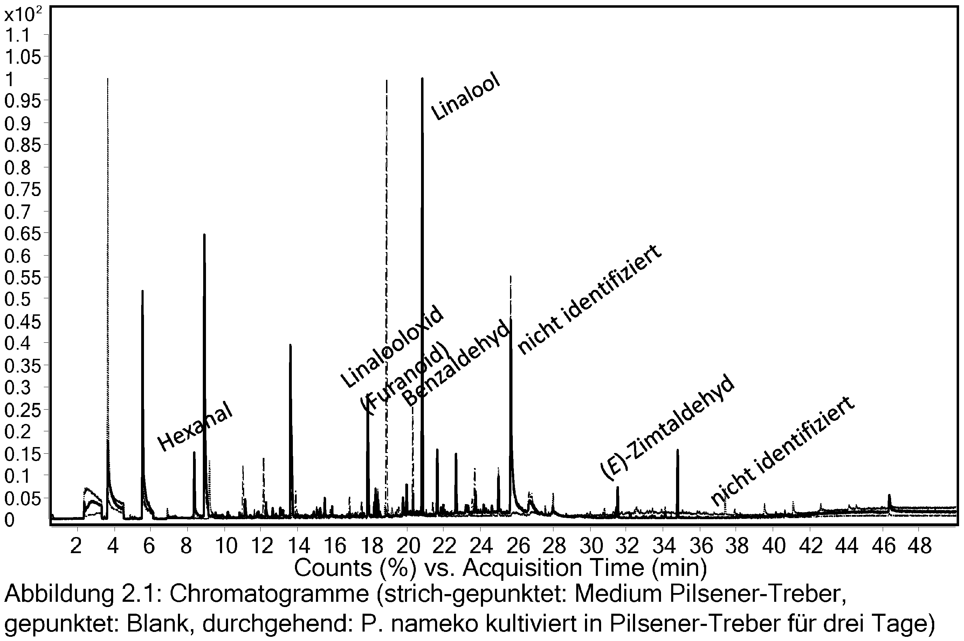

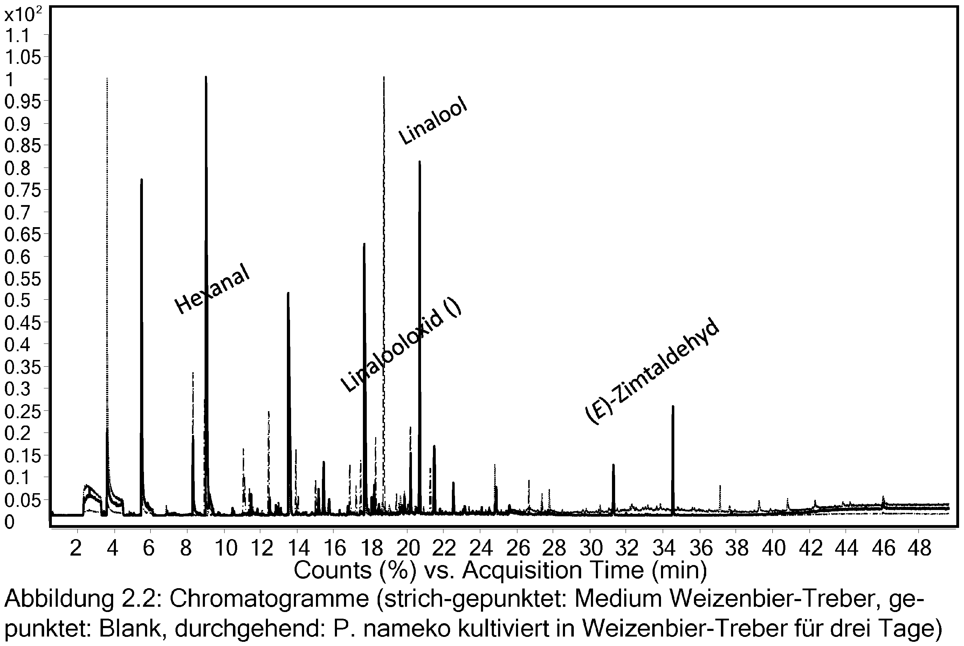

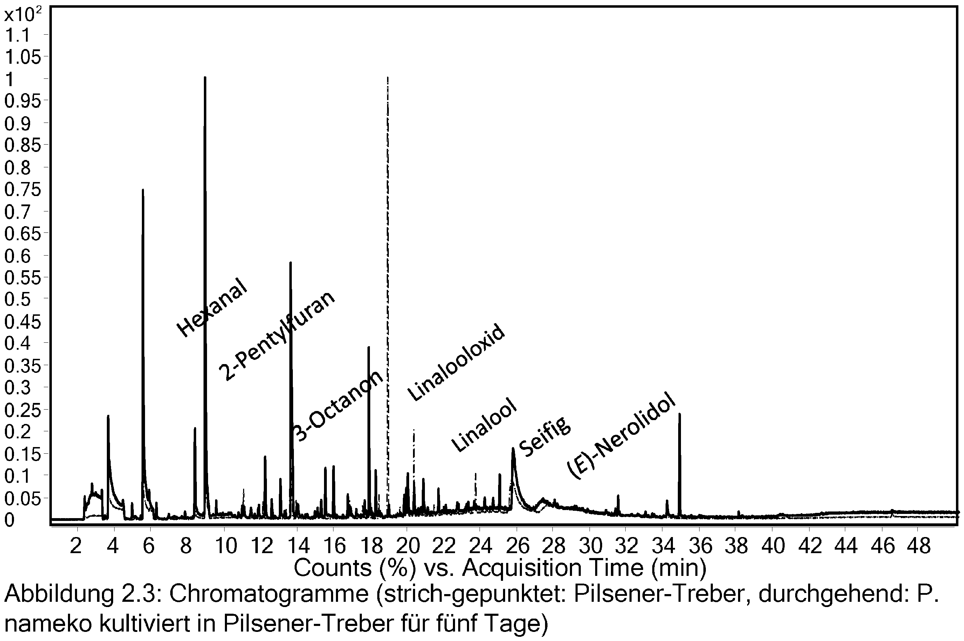

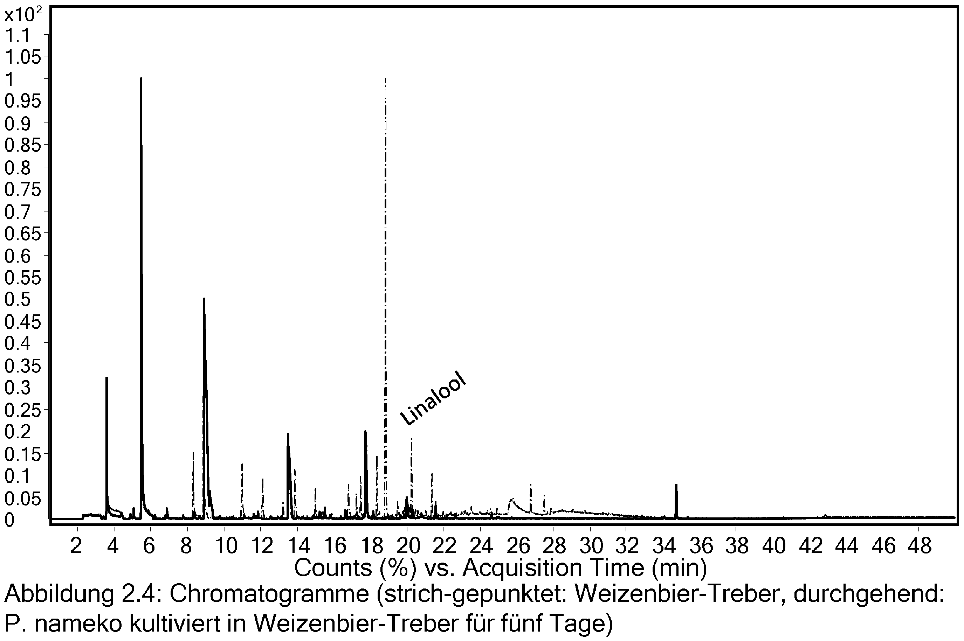

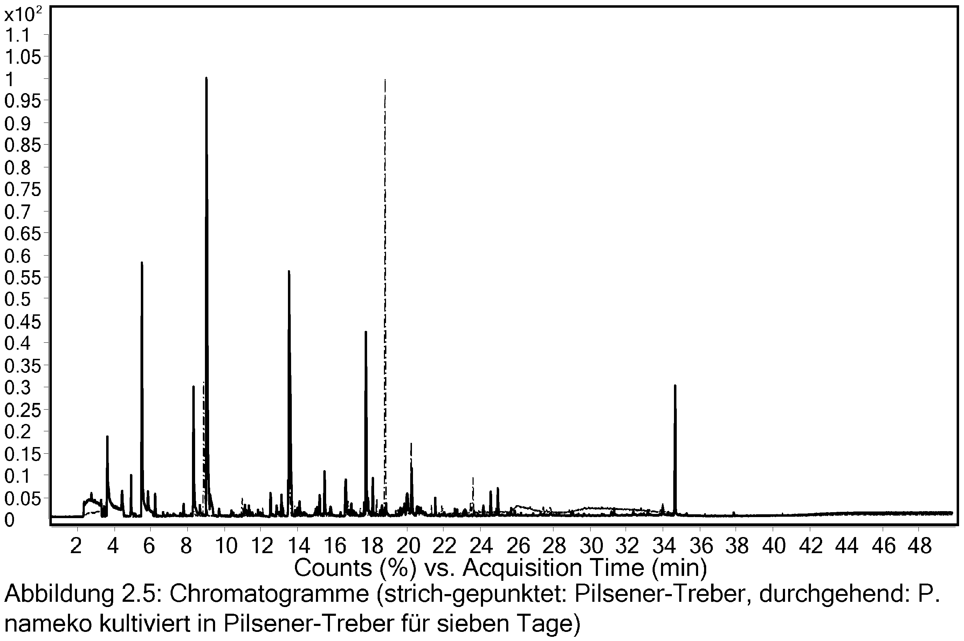

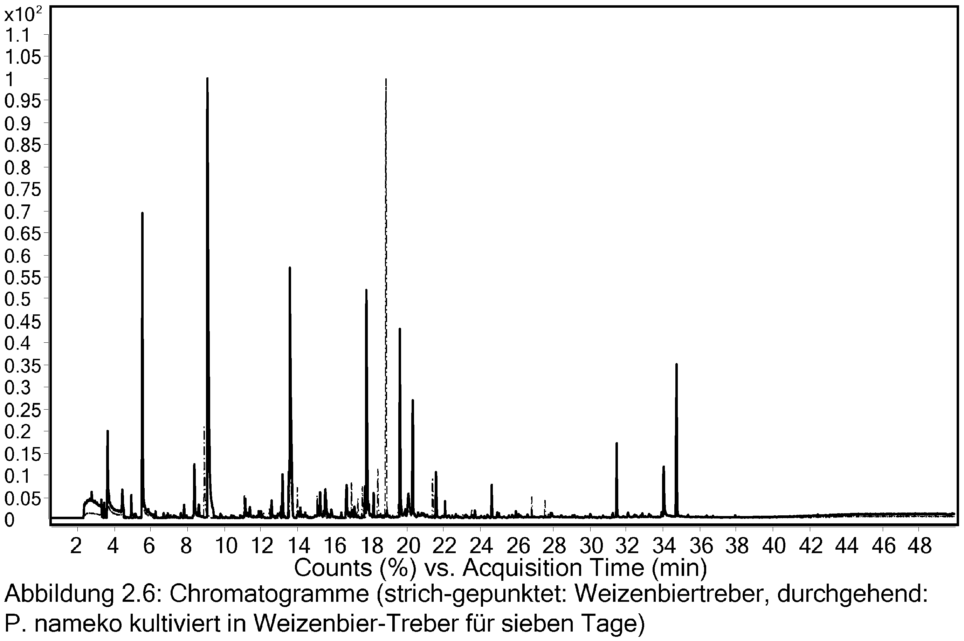

Nachfolgend wird die Erfindung anhand einer experimentellen Untersuchung mit ausgewählten Basidiomyceten unter Bezug auf die anliegenden Diagramme (Abbildungen 2.1 bis 2.6) näher erläutert. Die Angaben zur Kultivierung (Pilzstämme, Stammhaltung, Vorkulturen, Hauptkulturen) können mit den entsprechenden Anpassungen für die Übertragung des Verfahrens vom Labormaßstab auf den technischen Maßstab verwendet werden.

### Material und Methoden

### Organismen

Die für die Arbeiten verwendeten Basidiomyceten sind in Tabelle 1 aufgeführt.

**Tabelle 1: Verwendete Basidiomyceten.**

| **Stamm** | **Trivialname** | **Abkürzung** | **Interne Stamm-Nr.** | **Herkunft** | **Stamm-Nr.** |
|---|---|---|---|---|---|
| *Pleurotus eryngii* | Brauner Kräuterseitling | PER | 100 | DSMZ | 8264 |
| *Pholiota nameko* | Japanisches Stockschwämmchen | PNA | 113 | DSMZ | 6908 |
| *Cyclocybe aegerita* | Südlicher Ackerling | AAE | 166 | Fa. Sylvan, Horst, NL | 4022 |

### Substrate

Die Treber von Weizen- und Pilsener Bier wurden von der Störtebeker Braumanufaktur zur Verfügung gestellt. Die Treber wurden im Thermomix^{®} homogenisiert und bis zur Verwendung bei -20 °C gelagert. Die Trockenmasse der Biertreber betrug ca. 20%, für die Medien wurde dieser feucht eingesetzt.

Der Lupinenklarlauf 1 sowie Lupinenklarlauf S4 wurden von der Firma PROLupin geliefert, gefroren, bei -20 °C gelagert und vor der Verwendung durch Schütteln homogenisiert. Der Trockenmassegehalt des Lupinenklarlaufs 1 betrug 2,8 g/L, der von S4 0,12 g/L.

### Kultivierung

Die Kultivierung erfolgte unter sterilen Bedingungen. Alle im Folgenden beschriebenen Medien wurden vor der Verwendung für 20 min bei 121 °C autoklaviert. Die Kulturführung fand unter Lichtausschluss bei 24 °C statt. Submerskulturen wurden bei 150 rpm geschüttelt.

### Stammhaltung

Die Stammhaltung der verwendeten Basidiomyceten erfolgte in Emerskulturen auf Malzextrakt-Agar-Platten (MEA; 20 g/L Malzextrakt und 15 g/L Agar-Agar in vollentsalztem Wasser (VE-Wasser)). Es wurden jeweils 0,25 cm² frisches Mycel aus einer zu 80% bewachsenen Agarplatte ausgestochen und auf eine neue Platte transferiert. Dieser Vorgang wurde jeweils bei einem Bewuchs von 80% der Agarplatten wiederholt.

### Vorkulturen

Die Vorkulturen wurden in Malzextraktmedium angesetzt. Als Medium diente 20 g/L Malzextrakt in VE-Wasser. Die Kulturen wurden in Erlenmeyerkolben kultiviert, welche zu 40% ihres Volumens mit flüssigem Medium gefüllt wurden. Es wurden 0,25 cm² frisches Mycel einer zu 80% bewachsenen Agarplatte ausgestochen, in das Medium überführt und mittels Ultra-Turrax Dispergiergerät für 30 s homogenisiert. Die Vorkultur wurde für sieben Tage kultiviert.

### Hauptkulturen

Die Hauptkulturen wurden ebenfalls in Erlenmyerkolben mit 40 Vol.-% Medium gezüchtet. Die Zusammensetzung der *Fed-Batch* Medien für *P. eryngii* ist in Tabelle 2 aufgeführt. Für diese Medien wurde Weizenbiertreber in den angegebenen Mengen verwendet und das Medium anschließend mit Lupinenklarlauf 1 *ad* 40 Vol.-% aufgefüllt. Die Trockenmasse des Lupinenklarlaufs wurde hierbei nicht beachtet.

**Tabelle 2: Zusammensetzung der Fed-Batch Medien für die Kultivierung von P. eryngii.**

| **Kulturtag** | **Ansatz 1** | **Ansatz 2** | **Ansatz 3** | **Ansatz 4** |
|---|---|---|---|---|
| 0 | 10 g/L Trockenmasse | 10 g/L Trockenmasse | 5 g/L Trockenmasse | 5 g/L Trockenmasse |
| 2 | 10 g/L Trockenmasse | - | 5 g/L Trockenmasse | - |
| 4 | - | 10 g/L Trockenmasse | 5 g/L Trockenmasse | 5 g/L Trockenmasse |
| 7 | Ernte | Ernte | Ernte | Ernte |
| Insgesamt eingesetzte Biotrockenmasse Treber [g/L] | 20 | 20 | 15 | 10 |

Für die Kultivierung von *P. nameko* in Weizenbier- und Pilsener-Treber-Medien wurden jeweils 20 g/L Trockenmasse der homogenisierten Treber eingesetzt und mit Trinkwasser *ad* 40 Vol.-% im Kolben aufgefüllt.

*C. aegerita* wurde in 20 g Trockenmasse Pilsener-Treber pro Liter mit Lupinenklarlauf S4 *ad* 40 Vol.-% des Kolbens kultiviert und nach einer Woche geerntet.

Die Inokulation der Hauptkulturmedien erfolgte nach zweimaligem Waschen der homogenisierten Vorkulturen. Die Homogenisierung erfolgte analog zur Inokulation der Vorkulturen mittels Ultra-Turrax Dispergiergerät. Die Vorkulturen von *P. eryngii* wurden mit VE-Wasser gewaschen, die von *P. nameko* mit Trinkwasser.

### Ernte des Mycels

Nach Ende der jeweiligen Kultivierungsdauer wurde der Inhalt der Erlenmeyerkolben in ausgewogene Zentrifugenröhrchen überführt und für 10 min bei 3.500 g zentrifugiert. Der Überstand wurde verworfen und das Zentrifugenröhrchen erneut gewogen um die Biofeuchtmasse zu bestimmen. Anschließend wurden die Fermentate gefriergetrocknet. Die Zentrifugenröhrchen wurden erneut gewogen, um die Biotrockenmasse zu ermitteln. Für die weiteren Analysen wurden die Mycelien mittels RETSCH-Kugelmühle gemahlen und zu Pulver weiterverarbeitet.

### Analytik

### Bestimmung der Biomasse

Die Biotrockenmasse der Kulturen wurde aus der Differenz des getrockneten Mycels im Zentrifugenröhrchen und dem leeren Zentrifugenröhrchen gebildet.

### Bestimmung der Restfeuchte

Das gefriergetrocknete Mycel wurde mittels IR-Feuchtebestimmer analysiert, um die Restfeuchte zu bestimmen. In der Regel wurde die Bestimmung nach Herstellerangaben im Duplikat durchgeführt, wenn nicht genug Mycel vorhanden war, wurde eine Einfachbestimmung durchgeführt.

### Glutenanalyse

Für die Glutenanalysen wurden je eine Probe des Pilsener-Trebers und des Fermentats von Kulturtag sieben von *C*. *aegerita* gefriergetrocknet und mittels RETSCH Kugelmühle homogenisiert. Die Gluten-Analytik erfolgte mittels eines kompetitiven ELISA-Kits. Die Probe des Trebers wurde 1:10.000, die des Mycels 1:1.000 verdünnt.

### Bestimmung des Aminosäureprofils

Die Hydrolyse der Proben zur Aminosäureanalytik erfolgte auf drei unterschiedliche Weisen. Zum einen mittels saurer Totalhydrolyse, bei der Tryptohan, Cystein und Methionin nicht erfasst werden. Für die Bestimmung von Cystein und Methionin wurde ein oxidativer Aufschluss durchgeführt, damit diese als Cysteinsäure und Methioninsulfon bzw. Methioninsulfoxid analysiert werden können. Für die Bestimmung von Tryptophan wurde eine basische Hydrolyse durchgeführt.

### Bestimmung von Cystein und Methionin nach Oxidation

Zu Beginn wurde die Oxidationslösung für eine Stunde bei Raumtemperatur und anschließend für 15 min im Eisbad inkubiert. Von der Oxidationslösung wurden pro Probe 0,5 mL benötigt, welche sich aus 0,05 mL Wasserstoffperoxid (wt=30%) und 0,45 mL Ameisensäure (889 g Ameisensäure, 111 mL VE-Wasser und 4,73 g Phenol) zusammensetzt. Die Proben wurden in ein Zentrifugenröhrchen eingewogen und im Eisbad gekühlt. Je 0,5 mL der Oxidationslösung wurden zu den Proben gegeben und diese anschließend für 16 h im Eisbad bei 4 °C inkubiert.

Die Oxidation wurde durch die Zugabe von 84 mg Natriumdisulfit gestoppt. Anschließend wurden 2,5 mL phenolhaltige Salzsäure (6 M, 0,1% Phenol) hinzugegeben und die Proben wurden weitere 24 h inkubiert.

### Bestimmung der Gesamtaminosäuren nach saurer Hydrolyse

Die Proben wurden in Zentrifugenröhrchen eingewogen und mit 2,5 mL Salzsäure (6 M, 0,1% Phenol) versetzt. Die Inkubation erfolgte analog zur Bestimmung von Cystein und Methionin nach der Oxidation. Die Hydrolyse wurde durch Zugabe von Natronlauge (7,5 M) gestoppt und der pH-Wert auf 2,2 eingestellt. Anschließend wurden die Proben *ad* 20 mL mit dem Citratpuffer aufgefüllt, filtriert und vermessen.

### Bestimmung von Tryptophan nach alkalischer Hydrolyse

Die Proben wurden in Zentrifugenröhrchen eingewogen und mit 2,5 mL phenolischer Natronlauge (5 M, 0,1% Phenol) versetzt. Die Inkubation erfolgte analog zur sauren Hydrolyse bei 110 °C für 24 h, davon die erste Stunde mit leicht geöffnetem Deckel und 23 h mit fest verschlossenem Deckel. Nach dem Abkühlen der Proben wurde 1 mL Phosphorsäure (0,5 M) hinzugefügt, der pH-Wert auf 2,2 eingestellt und die Proben *ad* 20 mL in Messkolben mit Citratpuffer aufgefüllt. Vor der Analyse wurden die Proben membranfiltriert.

### Aminosäureanalysator

Die freigesetzten Aminosäuren wurden an einer Kationenaustauschersäule getrennt und mittels Nachsäulenderivatisierung mit Ninhydrin bei 570 nm beziehungsweise 440 nm für Prolin detektiert (Tabelle 3 - 4). Die Analyse erfolgt mittels Aminosäureanalysator S433 (SYKAM Vertriebs GmbH). Die Kalibration erfolgte über eine Einpunktkalibration.

**Tabelle 3: Geräteparameter der Aminosäureanalytik.**

| **Parameter** | | | | | | |
|---|---|---|---|---|---|---|
| Trennsäure | Kationentrennsäule LCA K13/Na für das erweiterte Hydrolysatprogramm; 4,6 × 175 mm | | | | | |
| Vorsäule | Ammoniakfiltersäule LCA K13/Na für ProteinHydrolysat; 4,6 × 100 mm | | | | | |
| Eluenten | A: Natrium-Citratpuffer; 0,12 N; pH 3,45 (SYKAM) | | | | | |
| | B: Natrium-Citratpuffer; 0,20 N; pH 10,85 (SYKAM) | | | | | |
| Flussrate | D: Regenerationslösung: Natronlauge; 0,5 M mit 0,68 mM EDTA | | | | | |
| | 0,45 mL/min | | | | | |
| Aminomodul | Ninhydrin; 0,1 M in Methanol | | | | | |
| | Waschlösung: Isopropanol/Ethanol/dd Wasser (1/1/2) | | | | | |
| Flussrate | 0,25 mL/min | | | | | |
| Gradient | **Zeit [min]** | **A [%]** | **B [%]** | **D [%]** | **Ninhydrin** | **Waschlsg.** |
| | 0 | 100 | 0 | 0 | 100 | 0 |
| | 11 | 95 | 5 | 0 | 100 | 0 |
| | 13 | 80 | 20 | 0 | 100 | 0 |
| | 25 | 70 | 30 | 0 | 100 | 0 |
| | 29 | 30 | 70 | 0 | 100 | 0 |
| | 31 | 20 | 80 | 0 | 100 | 0 |
| | 33 | 10 | 90 | 0 | 100 | 0 |
| | 41 | 0 | 100 | 0 | 100 | 0 |
| | 49,1 | 0 | 0 | 100 | 100 | 0 |
| | 50 | 0 | 0 | 100 | 0 | 100 |
| | 52,1 | 100 | 0 | 0 | 0 | 100 |
| | 65 | 100 | 0 | 0 | 100 | 0 |
| Säulenofen | **Zeit [min]** | | | **Temperatur [°C]** | | |
| | 0 | | | 49 | | |
| | 5 | | | 49 | | |
| | 10 | | | 56 | | |
| | 23 | | | 25 | | |
| | 28 | | | 74 | | |
| | 34 | | | 74 | | |
| | 39 | | | 50 | | |
| | 65 | | | 50 | | |
| Reaktortemperatur | 130 °C | | | | | |
| Injektionsvolumen | 50 µL | | | | | |
| Detektor | UV/Vis bei 570 nm und 440 nm (Prolin) | | | | | |
| Software | Chromstar 7.14 | | | | | |

**Tabelle 4: Geräteparameter der Tryptophananalyse.**

| **Parameter** | | | | | | |
|---|---|---|---|---|---|---|
| Eluenten | A: Natrium-Citratpuffer; 0,12 N; pH 3,45 (SYKAM) | | | | | |
| | B: Natrium-Citratpuffer; 0,20 N; pH 10,85 (SYKAM) | | | | | |
| | D: Regenerationslösung: Natronlauge; 0,5 M mit 0,68 mM | | | | | |
| Flussrate | EDTA | | | | | |
| | 0,45 mL/min | | | | | |
| Aminomodul | Ninhydrin; 0,1 M in Methanol | | | | | |
| | Waschlösung: Isopropanol/Ethanol/dd Wasser (1/1/2) | | | | | |
| Flussrate | 0,25 mL/min | | | | | |
| Gradient | **Zeit [min]** | **A [%]** | **B [%]** | **D [%]** | **Ninhydrin** | **Waschlsg.** |
| | 0 | 30 | 70 | 0 | 100 | 0 |
| | 7 | 10 | 90 | 0 | 100 | 0 |
| | 15 | 0 | 100 | 0 | 100 | 0 |
| | 20,1 | 0 | 0 | 0 | 100 | 0 |
| | 21 | 0 | 0 | 0 | 0 | 100 |
| | 23,1 | 30 | 70 | 0 | 0 | 100 |
| | 32 | 30 | 70 | 0 | 100 | 0 |
| Säulenofen | 74 °C | | | | | |
| Reaktortemperatur | 130 °C | | | | | |
| Injektionsvolumen | 50 µL | | | | | |
| Detektor | UV/Vis bei 570 nm | | | | | |
| Software | Chromstar 7.14 | | | | | |

### Gaschromatographie

Für die Bestimmung des Aromaprofils der Kulturen von *P. nameko* in Weizen- und Pilsener-Treber wurde an den jeweiligen Kulturtagen ein Aliquot von 4 mL des Kulturüberstandes steril in eine 20 mL Vial überführt, mittels *Solid Phase Microextraction* (SPME) extrahiert und mittels Gaschromatographie-Massenspektrometrie-Olfaktometrie (GC-MS-O) vermessen. Für die Aromaprofile der Referenz-Medien wurde ein Erlenmeyerkolben mit sterilem Medium parallel inkubiert und ebenfalls an den jeweiligen Kulturtagen aliquotiert. Die Bedingungen der gaschromatographischen Analyse sind in Tabelle zusammengefasst.

**Tabelle 5: Geräteparameter der SPME-GC-MS-O Analytik.**

| **Parameter** | | |
|---|---|---|
| GC | Agilent Technologies 7890B GC System mit 5977B MSD (Agilent Technologies, Waldbronn, Deutschland); | |
| | Gerstel MPS Robotic (Gerstel GmbH & Co. KG, Mülheim a.d.R., Deutschland) | |

| **Extraktion** | | |
|---|---|---|
| SPME-Faser | Divinylbenzol (DVB) / Carboxen (CAR) / | |
| | Polydimethylsiloxan (PDMS) | |
| Agitator | Inkubation: 10 min; 40 °C | |
| | | Agitator an: 30 s |
| | | Agitator aus: 3 s |
| | | Agitator Geschwindigkeit: 250 rpm |
| | Extraktion: 30 min; 40 °C | |
| | Desorption: 300 s | |

| **Injektion** | | |
|---|---|---|
| Liner | SPME-Liner / Glasverdampfrohr | |
| Modus | *splitless* | |

| **Trennung** | | |
|---|---|---|
| Trennsäule | VF-WAXms; 30 m × 250 µm × 0,25 µm | |
| Initiationstemperatur | 40 °C für 3 min | |
| Temperaturrampe | 5 °C min⁻¹ | |
| Temperaturmaximum | 240 °C für 7 min | |
| Laufzeit | 50 min | |
| Trägergas | He | |
| Fluss | 1,56 mL min⁻¹ | |

| **MS** - **Single Quadrupole** | | |
|---|---|---|
| Modus | *scan* (*m*/*z* 30-300) | |
| Ionisation | 70 eV | |
| Temperatur | Ionenquelle: 230 °C | |
| Solvent-delay | 0 min | |

| **Olfaktometrie Detektor Port (ODP)** | | |
|---|---|---|
| Transferline | 250 °C | |
| Mischkammerheizung | 150 °C | |
| Makeup Gas | N₂ | |

| **Software** | | |
|---|---|---|
| Datenaufnahme | MassHunter GC/MS Aquisition B 07.05.2479 | |
| Maestro | Maestro 1 Version 1.5.3.81/3.5 | |
| Datenauswertung | MassHunter Workstation Qualitative Analysis Version B.07.00 | |
| Datenbank | NIST MS Search 2.2 | |

### Ergebnisse

### Biotrockenmassen

Die Biotrockenmassen der Kulturen von *P. eryngii* in den unterschiedlichen *Fed Batch* Medien (vgl. Tabelle 2) nach sieben Tagen sind in Tabelle 6 aufgeführt. *Tabelle 6: Biotrockenmassen der Fed-Batch Kulturen von* P. eryngii *in Weizenbiertreber und Lupinenklarlauf.*

| | **Ansatz 1** | **Ansatz 2** | **Ansatz 3** | **Ansatz 4** |
|---|---|---|---|---|
| Biotrockenmasse [g/L] | 28,19 (± 0,615) | 27,37 (± 0,197) | 22,09 (± 0,206) | 19,22 (± 0,188) |

*C. aegerita* produzierte in 20 g/L Pilsener-Treber und Lupinenklarlauf S4 nach sieben Kulturtagen eine Trockenmasse von 18,88 ± 1,67 g/L.

Die Biotrockenmassen der kinetischen Reihe von *P. nameko* sind in Tabelle 7 gezeigt.

**Tabelle 7: Biotrockenmasse der kinetischen Reihe von P. nameko in Weizenbier- und Pilsener-Treber**

| **Kulturtag** | **Biotrockenmasse *P. nameko* in Pilsener-Treber [g/L]** | **Biotrockenmasse *P. nameko* in Weizenbiertreber [g/L]** |
|---|---|---|
| 3 | 22,73 (± 0,25) | 19,53 (± 1,3) |
| 5 | 21,92 (± 0,10) | 17,59 (± 0,44) |
| 7 | 20,44 (± 0,082) | 17,10 (± 0,22) |

### Glutenanalytik

Der Gliadingehalt des Pilsener-Trebers betrug 20,93 g/100 g. Der Gliadingehalt des fermentierten Trebers wurde zu 0,294 g/100 g bestimmt. Dies entspricht einem Glutenabbau von > 98%.

### Aminosäureprofil von P. eryngii kultiviert in Lupinenklarlauf und Weizenbiertreber

Die Aminosäureprofile der Kulturen von *P. eryngii* sind in Tabelle 8 aufgeführt. Die Angaben sind in g/100 g Trockenmasse Probe dargestellt und die Masse bezieht sich jeweils auf den *Aminoacidresidual,* also den Wert, den man erhält, wenn man berücksichtigt, dass die Aminosäuren im Protein gebunden vorliegen und bei deren Bindung ein Wassermolekül abgespalten wird. Die Ansätze beziehen sich auf die Medienzusammensetzung (vgl. Tabelle 2) und die zusätzliche Beschriftung A und B bezieht sich auf eine biologische Doppelbestimmung.

**Tabelle 8: Aminosäureresidual [g/100 g DM], in biologischem Duplikat kultiviert (A und B) und in Vierfachbestimmung analysiert**

| | **Ansat z 1 A** | **Ansat z 1 B** | **Ansat z 2 A** | **Ansat z 2 B** | **Ansat z 3 A** | **Ansat z 3 B** | **Ansat z 4 A** | **Ansat z 4 B** | **Weizenbiertre ber** |
|---|---|---|---|---|---|---|---|---|---|
| ALA | 1,527 (± 0,181) | 1,408 (± 0,029 ) | 1,386 (± 0,030 ) | 1,379 (± 0,004 ) | 1,257 (± 0,070 ) | 1,400 (± 0,037) | 1,204 (± 0,019) | 1,318 (± 0,042 ) | 0,991 (± 0,095) |
| ARG | 2,360 (± 0,337) | 2,070 (± 0,0500 ) | 2,014 (± 0,039 ) | 1,917 (± 0,016 ) | 1,615 (± 0,091 ) | 2,208 (±0,03 5) | 1,493 (± 0,015) | 1,682 (± 0,79) | 1,169 (± 0,051) |
| ASP ^{∗} | 2,648 (± 0,337) | 2,374 (± 0,045 ) | 2,317 (± 0,053 ) | 2,391 (± 0,006 ) | 2,068 (± 0,117 ) | 2,436 (± 0,056) | 1,935 (± 0,024) | 2,209 (± 0,075 ) | 1,554 (± 0,118) |
| CYS | 0,453 (± 0,009) | 0,486 (± 0,009 ) | 0,480 (± 0,031 ) | 0,458 (± 0,016 ) | 0,406 (± 0,007 ) | 0,477 (± 0,013) | 0,380 (± 0,005) | 0,394 (± 0,011 ) | 0,052 (± 0,002) |
| GLX ^{∗} | 4,425 (± 0,553) | 4,286 (± 0,074 ) | 3,787 (± 0,072 ) | 4,069 (± 0,016 ) | 3,642 (± 0,208 ) | 4,189 (± 0,108) | 3,513 (± 0,034) | 3,917 (± 0,131 ) | 3,705 (± 0,354) |
| GLY | 1,235 (± 0,138) | 1,157 (± 0,020 ) | 1,097 (± 0,024 ) | 1,126 (± 0,004 ) | 0,993 (± 0,051 ) | 1,161 (± 0,028) | 0,929 (± 0,015) | 1,037 (± 0,034 ) | 0,784 (± 0,069) |
| HIS | 1,320 (± 0,196) | 1,181 (± 0,039 ) | 1,155 (± 0,060 ) | 0,981 (± 0,022 ) | 1,175 (± 0,089 ) | 1,228 (± 0,008) | 1,096 (± 0,039) | 1,164 (± 0,017 ) | 0,617 (± 0,013) |
| ILE | 1,212 (± 0,144) | 1,088 (± 0,030 ) | 1,080 (± 0,019 ) | 1,139 (± 0,010 ) | 0,919 (± 0,059 ) | 1,113 (± 0,039) | 0,856 (± 0,015) | 0,981 (± 0,038 ) | 0,710 (± 0,054) |
| LEU | 2,166 (± 0,276) | 1,932 (± 0,044 ) | 1,915 (± 0,041 ) | 1,972 (± 0,005 ) | 1,616 (± 0,091 ) | 1,972 (± 0,046) | 1,492 (± 0,032) | 1,686 (± 0,059 ) | 1,405 (± 0,060) |
| LYS | 1,426 (± 0,200) | 1,278 (± 0,023 ) | 1,220 (± 0,025 ) | 1,191 (± 0,005 ) | 0,992 (± 0,067 ) | 1,228 (± 0,028) | 0,918 (± 0,014) | 1,049 (± 0,038 ) | 0,869 (±0,008) |
| MET | 0,365 (±0,01 4) | 0,366 (± 0,006 ) | 0,398 (± 0,017 ) | 0,410 (± 0,016 ) | 0,313 (± 0,005 ) | 0,402 (± 0,018) | 0,282 (± 0,017) | 0,320 (± 0,01 ) | 0,368 (± 0,097) |
| PHE | 1,415 (± 0,195) | 1,263 (± 0,031 ) | 1,229 (± 0,029 ) | 1,257 (± 0,012 ) | 1,060 (± 0,059 ) | 1,288 (± 0,029) | 0,808 (± 0,248) | 1,095 (± 0,038 ) | 0,972 (± 0,011) |
| PRO | 1,368 (± 0,163) | 1,273 (± 0,029 ) | 1,228 (± 0,029 ) | 1,277 (± 0,010 ) | 1,083 (± 0,065 ) | 1,298 (± 0,035) | 0,947 (± 0,018) | 1,041 (± 0,035 ) | 1,626 (± 0,272) |
| SER | 1,392 (± 0,163) | 1,264 (± 0,024 ) | 1,199 (± 0,023 ) | 1,248 (± 0,006 ) | 1,155 (± 0,064 ) | 1,283 (± 0,029) | 1,106 (± 0,014) | 1,237 (± 0,037 ) | 0,839 (± 0,068) |
| THR | 1,337 (± 0,167) | 1,167 (± 0,022 ) | 1,154 (± 0,026 ) | 1,239 (± 0,004 ) | 1,097 (± 0,063 ) | 1,271 (± 0,028) | 1,014 (± 0,012) | 1,132 (± 0,038 ) | 0,633 (± 0,056) |
| TRP | 0,132 (± 0,006) | 0,128 (± 0,013 ) | 0,135 (± 0,001 ) | 0,127 (± 0,005 ) | 0,061 (± 0,008 ) | 0,091 (± 0,0005) | 0,078 (±0,00 6) | 0,071 (± 0,005 ) | 0,149 (± 0,003) |
| TYR | 0,678 (±0,10 2) | 0,566 (± 0,023 ) | 0,542 (± 0,010 ) | 0,615 (± 0,020 ) | 0,524 (± 0,028 ) | 0,656( ± 0,004) | 0,531 (± 0,016) | 0,593 (± 0,037 ) | 0,562 (± 0,020) |
| VAL | 1,556 (± 0,191 | 1,348 (± 0,027 ) | 1,360 (± 0,036 ) | 1,413 (± 0,009 ) | 1,140 (± 0,067 ) | 1,401 (± 0,033) | 1,072 (± 0,023) | 1,206 (± 0,047 ) | 1,007 (± 0,050) |
| **SUM** | **27,02 (± 3,34)** | **24,64 (± 0,47)** | **23,70 (± 0,47)** | **24,21 (± 0,08)** | **21,12 (± 1,17)** | **25,10 (± 0,56)** | **19,65 (± 0,42)** | **22,13 (± 0,71)** | **18,01 (±0,61)** |
| **EAA I** | **99** | **99** | **99** | **99** | **98** | **98** | **97** | **98** | **88** |
| **BV** | **97** | **96** | **96** | **96** | **95** | **95** | **94** | **95** | **84** |
| **Limi t. AA** | **LYS** | **LYS** | **LYS, CYS & MET** | **LYS** | **LYS** | **LYS, CYS & MET** | **LYS, CYS & MET** | **LYS** | **CYS & MET, TRP** |

| | | | | | | | | | |
|---|---|---|---|---|---|---|---|---|---|
| SUM: Summe EAAI: *essential Amino Acid Index* BV: *Biological Value* Limit. AA: Limitierende Aminosäure | | | | | | | | | |

Im Durchschnitt wurde für die Mycelien ein EAAI von 98,4 sowie eine biologische Wertigkeit von 95,5 bestimmt. Damit wurde die Wertigkeit des Proteins im Vergleich zum nicht fermentierten Treber (EAAI 88 bzw. BV 84) signifikant verbessert.

### Aromaanalytik

Die Kulturen von *P. nameko* wurden ebenfalls in biologischer Doppelbestimmung kultiviert und mittels SPME-GC-MS-O analysiert. Die Ergebnisse wahrgenommenen Geruchseindrücke zusammen mit Substanzvorschlägen sind in den Tabellen 9 - 14 aufgeführt, die zugehörigen Chromatogramme in den Abbildungen 2.1 - 2.6. Es sind jeweils die Chromatogramme des nicht inokulierten Mediums als Vergleich dargestellt.

**Tabelle 9: Aromaprofil von P. nameko kultiviert in Pilsener-Treber für drei Tage (Probe 1); RI: Retentionsindex.**

| **Retentionszeit [min]** | **RI** | **Substanzvorschlag (mit RI) NIST Datenbank** | **Geruchseindruck** | **RI Standard** |
|---|---|---|---|---|
| 5,42 | 953 | 2-Ethylfuran (950) | süßlich | |
| 8,38 | 1081 | Hexanal (1083) | pilzig, frisch | 1082 |
| 9,38 | 1118 | | süßlich | |
| 9,54 | 1124 | 2-Butylfuran (1123) | herb | |
| 13,07 | 1250 | 6-Methyl-3-heptanone (1247) | pilzig | |
| 13,41 | 1255 | | süßlich, pilzig | |
| 13,97 | 1282 | 2-Octanon (1287) | | 1279 |
| 14,46 | 1299 | 1-Octen-3-on (1300) | Champignon, frisch | 1301/1302 |
| 15,91 | 1353 | 1-Hexanol (1355) | würzig | 1349 |
| 17,20 | 1401 | | kautig | |
| 18,22 | 1442 | (Z)-Linalooloxid (1444) | erdig, waldig | 1442 |
| 19,89 | 1507 | 2-Acetylfuran (1499) | grün, seifig | |
| 20,33 | 1525 | Benzaldehyd (1520) | stechend, süßlich | 1519 |
| 20,84 | 1546 | Linalool (1547) | blumig, Blaubeere | 1549 |
| 23,35 | 1652 | Acetophenon (1647) | süßlich | |
| 24,19 | 1689 | | Champignon | |
| 24,65 | 1709 | (*E*)-Germacrene D (1710) | herb, süßlich | |
| 25,68 | 1756 | | pilzig | |
| 27,35 | 1834 | | angebrannt | |
| 31,30 | 2030 | | seifig | |
| 31,45 | 2038 | (*E*)-Nerolidol (2042) | säuerlich | 2042 |
| 31,52 | 2041 | (*E*)-Zimtaldehyd (2040) | | 2046 |
| 34,79 | 2218 | | Brühe, würzig, pilzig | |

**Tabelle 10: Aromaprofil von P. nameko kultiviert in Weizenbiertreber für drei Tage (Probe 2); RI: Retentionsindex.**

| **Retentionszeit [min]** | **RI** | **Substanzvorschlag (mit RI) NIST Datenbank** | **Geruchseindruck** | **RI Standard** |
|---|---|---|---|---|
| 4,74 | 918 | 2-Methylbutanal (918) | süßlich | 914 |
| 8,37 | 1081 | Hexanal (1083) | würzig | 1082 |
| 13,05 | 1249 | 1-Pentanol (1250) | leicht pilzig | 1251 |
| 14,58 | 1304 | 1-Octen-3-one (1300) | pilzig | 1301/1302 |
| 16,63 | | | pilzig | - |
| 17,58 | | | brenzlig | - |
| 17,95 | 1431 | 2-(*E*)-Octenal (1429) | herb | 1434 |
| 18,22 | 1441 | (*Z*)-Linalooloxid (1444) | grün | - |
| 18,71 | 1461 | (-)-*α*-Cubeben (1463) | herb, Kakao | - |
| 19,89 | 1507 | | seifig | - |
| 20,85 | 1547 | Linalool (1547) | blumig, süßlich | 1549 |
| 21,66 | 1580 | | grün | - |
| 27,40 | 1836 | Calamenen (1839) | Lakritz, würzig | - |
| 31,30 | 2030 | *γ*-Nonalacton (2024) | süßlich | - |
| 31,45 | 2038 | (*E*)-Nerolidol (2042) | frisch | 2042 |
| 31,52 | 2042 | (*E*)-Zimtaldehyd (2040) | | 2046 |
| 32,22 | 2078 | | säuerlich, muffig | - |
| 34,80 | 2219 | | stark pilzig, muffig | - |

**Tabelle 11: Aromaprofil von P. nameko kultiviert in Pilsener-Treber für fünf Tage (Probe 1); RI: Retentionsindex.**

| **Retentionszeit [min]** | **RI** | **Substanzvorschlag (mit RI) NIST Datenbank** | **Geruchseindruck** | **RI Standard** |
|---|---|---|---|---|
| 4,94 | 928 | | pilzig, Brühe | - |
| 6,26 | 997 | | leicht pilzig | - |
| 12,19 | 1219 | 2-Pentylfuran (1231) | seifig, holzig, erdig | - |
| 13,03 | 1248 | 3-Octanon (1253) | holzig, pilzig | 1249 |
| 13,99 | 1283 | Octanal (1289) | süßlich, fruchtig | 1284 |
| 14,49 | 1301 | 1-Octen-3-on (1303) | Champignon, frisch | 1301/1302 |
| 17,15 | 1400 | | pilzig | - |
| 18,21 | 1441 | (*Z*)-Linalooloxide (furanoid) (1444) | grün | - |
| 20,31 | 1524 | Benzaldehyd (1524) | seifig, stechend | 1519 |
| 20,81 | 1545 | Linalool (1547) | Blaubeere, blumig | 1549 |
| 23,26 | 1648 | 2-Acetylthiazol (1642) | brotig, muffig | 1643 |
| 24,62 | 1708 | | pilzig | - |
| 24,97 | 1724 | | seifig | - |
| 31,43 | 2037 | (*E*)-Nerolidol (2042) | nicht wahrgenommen | 2042 |

**Tabelle 12: Aromaprofil von P. nameko kultiviert in Weizenbiertreber für fünf Tage (Probe 2); RI: Retentionsindex.**

| **Retentionszeit [min]** | **RI** | **Substanzvorschlag (mit RI) NIST Datenbank** | **Geruchseindruck** | **RI Standard** |
|---|---|---|---|---|
| 4,93 | 927 | | pilzig, Brühe | - |
| 6,26 | 997 | | leicht pilzig | - |
| 7,08 | 1030 | | pilzig | - |
| 8,37 | 1081 | | Brühe, würzig | - |
| 12,93 | 1245 | | Brühe | - |
| 14,44 | 1299 | 1-Octen-3-on (1303) | pilzig, frisch | 1301/1302 |
| 15,55 | 1340 | | angebrannt, süßlich | - |
| 17,9 | kein Peak | | Kakao, süßlich | - |
| 18,2 | 1441 | (*Z*)-Linalooloxid (1444) | grün | - |
| 18,93 | 1469 | (*Z*)-Linalooloxid (1465) | frisch, Minze | - |
| 19,43 | 1489 | | Schokolade | - |
| 20,84 | 1546 | Linalool (1547) | seifig, Blaubeere | 1549 |
| 24,67 | 1710 | | pilzig, erdig | - |
| 25,03 | 1728 | *α*-Muurolen (1726) | erdig, waldig | - |
| 25,79 | 1761 | *δ*-Cardinen (1758) | grün, stechend | - |
| 29,19 | 1923 | | süßlich, würzig | - |
| 29,8 | 1953 | | krautig | - |
| 35,42 | 2254 | | pilzig, erdig, muffig | - |

**Tabelle 13: Aromaprofil von P. nameko kultiviert in Pilsener-Treber für sieben Tage (Probe 1); RI: Retentionsindex.**

| **Retentionszeit [min]** | **RI** | **Substanzvorschlag (mit RI) NIST Datenbank** | **Geruchseindruck** | **RI Standard** |
|---|---|---|---|---|
| 4,94 | 928 | | pilzig | - |
| 6,71 | 1016 | | frisch | - |
| 7,27 | 1038 | 2-Methyl-3-buten-2-ol (1038) | frisch, seifig | 1038 |
| 7,82 | 1059 | | würzig, Brühe | - |
| 8,24 | 1076 | | brotig | - |
| 8,38 | 1081 | Hexanal (1083) | grün, seifig | 1082 |
| 8,72 | 1095 | | seifig | - |
| 11,2 | 1183 | Heptanal (1184) | würzig, krautig | 1187 |
| 12,93 | 1245 | | Brühe | - |
| 13,57 | 1268 | | seifig | - |
| 14,4 | kein Peak | | pilzig, frisch | - |
| 15,29 | 1330 | | pilzig | - |
| 16,72 | 1384 | | herb, pfeffrig | - |
| 17,34 | 1407 | | pilzig | - |
| 18,94 | 1470 | (*Z*)-Linalooloxid (1465) | süßlich, stechend, fruchtig | - |
| 19,94 | 1509 | | seifig, frisch | - |
| 20,85 | 1547 | Linalool (1547) | blumig, seifig | 1549 |
| 21,12 | 1558 | | süßlich, fruchtig | - |
| 23,62 | 1649 | | herb, sojaartig | - |
| 24,27 | 1692 | *γ-*Muurolen (1692) | brotig | - |
| 24,68 | 1710 | | pilzig, brenzlig | - |
| 25,07 | 1728 | *α* Muurolen (1726) | Anis, würzig | - |
| 25,8 | 1762 | *δ-*Cadinen (1758) | grün, frisch | - |
| 27,0 | 1817 | Tridecanal (1823) | wachsig, süßlich | - |
| 31,45 | 2038 | | frisch | - |
| 3,97 | 2173 | | frisch, herb, Chlor | - |
| 34,79 | 2254 | | muffig, erdig | - |

**Tabelle 14: Aromaprofil von P. nameko kultiviert in Weizen-Treber für sieben Tage (Probe 2); RI: Retentionsindex.**

| **Retentionszeit [min]** | **RI** | **Substanzvorschlag (mit RI) NIST Datenbank** | **Geruchseindruck** | **RI Standard** |
|---|---|---|---|---|
| 4,95 | 928 | | pilzig, muffig | - |
| 6,26 | 997 | | süßlich, brotig | - |
| 8,39 | 1082 | Hexanal (1083) | fruchtig, süßlich | 1082 |
| 12,63 | 1234 | 2-Pentylfuran (1231) | herb, pilzig | - |
| 12,89 | 1244 | | muffig | - |
| 13,22 | 1255 | 3-Octanon (1253) | pilzig | 1249 |
| 14,46 | 1300 | 1-Octen-3-on (1303) | Champignon, frisch | 1301 / 1302 |
| 16,73 | 1384 | | herb | - |
| 17,61 | 1418 | | Kakao, herb | - |
| 18,94 | 1470 | (*Z*)-Linalooloxid (1465) | seifig, süßlich | - |
| 20,85 | 1546 | Linalool (1547) | seifig | 1549 |
| 22,12 | 1599 | 2-Undecanon (1598) | süßlich, sahnig | 1602 |
| 24,45 | 1700 | | würzig, brotig | - |
| 24,68 | 1711 | | erdig | - |
| 25,07 | 1728 | *α*-Muurolen (1726) | süßlich, seifig | - |
| 25,8 | 1762 | | seifig, grün | - |
| 30,07 | 1967 | | säuerlich, brotig | - |
| 31,52 | 2041 | (*E*)-Zimtaldehyd (2040) | süßlich, frisch | 2046 |
| 32,14 | 2074 | | würzig | - |
| 34,1 | 2179 | Nonansäure (2171) | Lösemittel, wachsig | - |
| 34,8 | 2218 | | würzig | - |
| 35,43 | 2254 | | krautig | - |

## Patentansprüche

1. Verfahren zum Herstellen von Bier oder einem anderen Getränk und eines proteinhaltigen Produktes auf der Basis von Getreide als Einsatzstoff, bei dem:
• eine Maische aus vermälztem und/oder unvermälztem Getreide hergestellt wird,
• die Maische in eine erste Stofffraktion mit geringem Feststoffgehalt und in eine zweite Stofffraktion mit hohem Feststoffgehalt fraktioniert wird,
• die erste Stofffraktion für die Herstellung von Bier oder einem anderen Getränk eingesetzt wird,
• die zweite Stofffraktion mit einem Pilzinokulat von Basidiomyceten inokuliert wird,
• die inokulierte Stofffraktion fermentiert wird und
• ein Proteine enthaltendes Pilzmycel gebildet wird.

2. Verfahren nach Anspruch 1, bei dem das Verfahren zum Herstellen eines Getränks ein Brauprozess zum Herstellen von Bier, ein Verfahren zum Herstellen von Spirituosen oder ein Verfahren zum Herstellen von Getränken unter Verwendung von Malzauszügen ist.

3. Verfahren nach Anspruch 1 oder 2, bei dem Getreide vermälzt und das vermälzte Getreide vermaischt wird.

4. Verfahren nach einem der Ansprüche 1 bis 3, umfassend mindestens eines der folgenden Merkmale:
• das dem Mälzereiprozess oder Maischprozess als Einsatzstoff zugeführte Getreide wird gereinigt und/oder daraus werden fehlerhafte Getreidekörner und/oder Schadstoffe und/oder Fremdstoffe aussortiert,
• dem Mälzereiprozess oder Maischprozess wird nach vorgegebenen Kriterien vereinheitlichtes Getreide als Einsatzstoff zugeführt,
• für den Anbau des dem Mälzereiprozess oder Maischprozess als Einsatzstoff zugeführten Getreides wird spezifiziertes Saatgut verwendet,
• dem Mälzereiprozess oder Maischprozess wird Getreide einer oder mehrerer spezifizierter Sorten als Einsatzstoff zugeführt,
• der Anbau des dem Mälzereiprozess oder Maischprozess zugeführten Getreides wird nach spezifizierten Vorgaben durchgeführt,
• dem Mälzereiprozess oder Maischprozess wird Biogetreide als Einsatzstoff zugeführt,
• Herkunft, Lieferweg, Anbau, Verarbeitung und/oder Eigenschaften des verwendeten Saatgutes und/oder des zugeführten Getreides werden überwacht,
• die Eigenschaften des dem Mälzereiprozess oder Maischprozess zugeführten Getreides werden überwacht,
• die Eigenschaften des dem Maischprozess als Einsatzstoff zugeführten vermälzten und geschroteten Getreides werden überwacht,
• die Eigenschaften der für die Herstellung des proteinhaltigen Pilzmycels eingesetzten Stofffraktion werden überwacht,
• die Eigenschaften des hergestellten proteinhaltigen Pilzmycels werden überwacht,
• die Überwachung umfasst Probennahme, Analysieren von Proben, Auswertung von Analysen, Qualifizieren von Proben und/oder Eingriff in den Prozess.

5. Verfahren nach einem der Ansprüche 1 bis 4, bei dem mindestens eine der nachfolgenden Stofffraktionen für die Herstellung von Proteinen und/oder Aromastoffen eingesetzt wird: Bierhefe, Prozessbier, Schlempe, Prozesswasser.

6. Verfahren nach einem der Ansprüche 1 bis 5, bei denen der Mälzereiprozess und die auf den Mälzereiprozess folgenden Schritte des Brauprozesses oder eines anderen Verfahrens zum Herstellen von Getränken Inline durchgeführt werden.

7. Verfahren nach einem der Ansprüche 1 bis 6, bei dem der Brauprozess oder ein anderes Verfahren zum Herstellen von Getränken und die Herstellung von Proteinen Inline durchgeführt werden.

8. Verfahren nach einem der Ansprüche 1 bis 6, Stofffraktion mit hohem Feststoffanteil nach dem Abtrennen von der Bierwürze mittels Lkw, Bahn, Schiff oder einem anderen Transportfahrzeug zum Ort der Fermentation transportiert wird.

9. Verfahren nach einem der Ansprüche 1 bis 8, bei dem die für die Herstellung von Proteinen und/oder Aromastoffen eingesetzte Stofffraktion mit Wasser verdünnt wird.

10. Verfahren nach einem der Ansprüche 1 bis 9, bei dem die für die Herstellung von Proteinen und/oder Aromastoffen eingesetzte Stofffraktion frisch verarbeitet und/oder mikrobiologisch stabilisiert wird.

11. Verfahren nach Anspruch 10, bei dem die für die Herstellung von Proteinen eingesetzte Stofffraktion durch mindestens eine der folgenden Maßnahmen frisch verarbeitet und/oder mikrobiologisch stabilisiert wird: durch kurze Verweilzeiten vom Abtrennen bis zum Fermentieren der Stofffraktion, durch Nacherhitzung auf mindestens 80°, durch Herunterkühlen auf eine Temperatur unter 30°C, durch Zusetzen von Säure, vorzugsweise von Milchsäure, vorzugsweise von Milchsäure aus dem Brauprozess oder einem anderen Verfahren zum Herstellen von Lebensmitteln, durch Einsatz von Basidiomyceten, die antimikrobielle Verbindungen bilden, durch regelmäßiges Entleeren, Reinigen und Sterilisieren, vorzugsweise mindestens täglich, der Anlagenteile, durch die die Stofffraktion hindurch geführt und/oder in denen sie gelagert wird.

12. Verfahren nach einem der Ansprüche 1 bis 11, bei dem die für die Herstellung von Proteinen eingesetzte Stofffraktion zerkleinert wird, vorzugsweise bevor sie mit Wasser verdünnt wird.

13. Verfahren nach einem der Ansprüche 1 bis 12, bei dem die für die Herstellung von Proteinen eingesetzte Stofffraktion vor der Fermentation homogenisiert wird.

14. Verfahren nach einem der Ansprüche 1 bis 13, bei dem die für die Herstellung von Proteinen eingesetzte Stofffraktion durch Zugabe von Wasser mit einer Temperatur unter 30 °C verdünnt und gekühlt wird.

15. Verfahren nach einem der Ansprüche 1 bis 14, bei dem die zu fermentierende Stofffraktion vor dem Einspeisen in den Fermenter mit dem Inokulat gemischt wird und/oder das Inokulat gesondert von der zu fermentierenden Stofffraktion in den Fermenter eingespeist und in dem Fermenter mit der zu fermentierenden Stofffraktion gemischt wird.

16. Verfahren nach einem der Ansprüche 1 bis 15, bei dem die inokulierte Stofffraktion in einer Submerskultur fermentiert wird.

17. Verfahren nach einem der Ansprüche 1 bis 16, bei dem der Fermenter diskontinuierlich, kontinuierlich oder im Fed-Batch-Prozess betrieben wird.

18. Verfahren nach einem der Ansprüche 1 bis 17, bei dem während der Fermentation die Fermentationsbrühe gerührt und/oder umgepumpt wird.

19. Verfahren nach einem der Ansprüche 1 bis 18, bei dem die Fermentation bei einer Temperatur zwischen 18°C und 30 °C, vorzugsweise zwischen 20°C bis 26°C, durchgeführt wird.

20. Verfahren nach einem der Ansprüche 1 bis 19, bei dem die Substratzusammensetzung bei der Fermentation so eingestellt wird, dass der C-Gehalt 4 bis 20 g/l, der N-Gehalt 0,5 bis 5 g/l und/oder das C/N-Verhältnis ca. 20 bis 40 beträgt.

21. Verfahren nach einem der Ansprüche 1 bis 20, bei dem das Proteine enthaltende Pilzmycel aus der bei der Fermentation gebildeten Pilzmaische abgetrennt wird.

22. Verfahren nach einem der Ansprüche 1 bis 21, bei dem das Pilzmycel durch Filtrierung, Dekantieren, Zentrifugieren oder Abscheiden von der Pilzmaische abgetrennt wird.

23. Verfahren nach einem der Ansprüche 1 bis 22, bei dem das Proteine enthaltende Pilzmycel als Endprodukt verwendet wird.

24. Verfahren nach einem der Ansprüche 1 bis 23, bei dem die Proteine und/oder Aromastoffe zumindest teilweise vom Pilzmycel abgetrennt werden, vorzugsweise durch Extraktion.

25. Verfahren nach einem der Ansprüche 1 bis 24, bei dem anfallende Reststoffe, ggfs. nach einer Aufbereitung, einem vorangehenden Verfahrensschritt zugeführt werden.

26. Verfahren nach einem der Ansprüche 1 bis 25, bei dem das Pilzmycel zu einem Lebensmittel, Nutraceutical, Genussmittel oder Arzneimittel verarbeitet wird.

27. Verfahren nach einem der Ansprüche 1 bis 26, bei dem die Proteine und/oder Aromastoffe aus dem Pilzmycel extrahiert und zu einem Lebensmittel, Nutraceutical, Genussmittel oder Arzneimittel verarbeitet werden.

## Geänderte Patentansprüche

### Geänderte Patentansprüche gemäss Regel 137(2) EPÜ.

1. Verfahren zum Herstellen von Bier oder einem anderen Getränk und eines proteinhaltigen Produktes auf der Basis von Getreide als Einsatzstoff, bei dem:
• eine Maische aus vermälztem und/oder unvermälztem Getreide hergestellt wird,
• die Maische in eine erste Stofffraktion mit geringem Feststoffgehalt und in eine zweite Stofffraktion mit hohem Feststoffgehalt fraktioniert wird,
• die erste Stofffraktion für die Herstellung von Bier oder einem anderen Getränk eingesetzt wird,
• die zweite Stofffraktion mit einem Pilzinokulat von Basidiomyceten inokuliert wird,
• die inokulierte Stofffraktion in einer Submerskultur fermentiert wird,
• ein Proteine enthaltendes Pilzmycel gebildet wird und
• das Herstellen von Bier oder eines anderen Getränks und das Herstellen des proteinhaltigen Produkts inline durchgeführt werden.

2. Verfahren nach Anspruch 1, bei dem das Verfahren zum Herstellen eines Getränks ein Brauprozess zum Herstellen von Bier, ein Verfahren zum Herstellen von Spirituosen oder ein Verfahren zum Herstellen von Getränken unter Verwendung von Malzauszügen ist.

3. Verfahren nach Anspruch 1oder 2, bei dem Getreide vermälzt und das vermälzte Getreide vermaischt wird.

4. Verfahren nach einem der Ansprüche 1 bis 3, umfassend mindestens eines der folgenden Merkmale:
• das dem Mälzereiprozess oder Maischprozess als Einsatzstoff zugeführte Getreide wird gereinigt und/oder daraus werden fehlerhafte Getreidekörner und/oder Schadstoffe und/oder Fremdstoffe aussortiert,
• dem Mälzereiprozess oder Maischprozess wird nach vorgegebenen Kriterien vereinheitlichtes Getreide als Einsatzstoff zugeführt,
• für den Anbau des dem Mälzereiprozess oder Maischprozess als Einsatzstoff zugeführten Getreides wird spezifiziertes Saatgut verwendet,
• dem Mälzereiprozess oder Maischprozess wird Getreide einer oder mehrerer spezifizierter Sorten als Einsatzstoff zugeführt,
• der Anbau des dem Mälzereiprozess oder Maischprozess zugeführten Getreides wird nach spezifizierten Vorgaben durchgeführt,
• dem Mälzereiprozess oder Maischprozess wird Biogetreide als Einsatzstoff zugeführt,
• Herkunft, Lieferweg, Anbau, Verarbeitung und/oder Eigenschaften des verwendeten Saatgutes und/oder des zugeführten Getreides werden überwacht,
• die Eigenschaften des dem Mälzereiprozess oder Maischprozess zugeführten Getreides werden überwacht,
• die Eigenschaften des dem Maischprozess als Einsatzstoff zugeführten vermälzten und geschroteten Getreides werden überwacht,
• die Eigenschaften der für die Herstellung des proteinhaltigen Pilzmycels eingesetzten Stofffraktion werden überwacht,
• die Eigenschaften des hergestellten proteinhaltigen Pilzmycels werden überwacht,
• die Überwachung umfasst Probennahme, Analysieren von Proben, Auswertung von Analysen, Qualifizieren von Proben und/oder Eingriff in den Prozess.

5. Verfahren nach einem der Ansprüche 1 bis 4, bei dem mindestens eine der nachfolgenden Stofffraktionen für die Herstellung von Proteinen und/oder Aromastoffen eingesetzt wird: Bierhefe, Prozessbier, Schlempe, Prozesswasser.

6. Verfahren nach einem der Ansprüche 1 bis 5, bei denen der Mälzereiprozess und die auf den Mälzereiprozess folgenden Schritte des Brauprozesses oder eines anderen Verfahrens zum Herstellen von Getränken Inline durchgeführt werden.

7. Verfahren nach einem der Ansprüche 1 bis 6, Stofffraktion mit hohem Feststoffanteil nach dem Abtrennen von der Bierwürze mittels Lkw, Bahn, Schiff oder einem anderen Transportfahrzeug zum Ort der Fermentation transportiert wird.

8. Verfahren nach einem der Ansprüche 1 bis 7, bei dem die für die Herstellung von Proteinen und/oder Aromastoffen eingesetzte Stofffraktion mit Wasser verdünnt wird.

9. Verfahren nach einem der Ansprüche 1 bis 8, bei dem die für die Herstellung von Proteinen und/oder Aromastoffen eingesetzte Stofffraktion frisch verarbeitet und/oder mikrobiologisch stabilisiert wird.

10. Verfahren nach Anspruch 9, bei dem die für die Herstellung von Proteinen eingesetzte Stofffraktion durch mindestens eine der folgenden Maßnahmen frisch verarbeitet und/oder mikrobiologisch stabilisiert wird: durch kurze Verweilzeiten vom Abtrennen bis zum Fermentieren der Stofffraktion, durch Nacherhitzung auf mindestens 80°, durch Herunterkühlen auf eine Temperatur unter 30°C, durch Zusetzen von Säure, vorzugsweise von Milchsäure, vorzugsweise von Milchsäure aus dem Brauprozess oder einem anderen Verfahren zum Herstellen von Lebensmitteln, durch Einsatz von Basidiomyceten, die antimikrobielle Verbindungen bilden, durch regelmäßiges Entleeren, Reinigen und Sterilisieren, vorzugsweise mindestens täglich, der Anlagenteile, durch die die Stofffraktion hindurch geführt und/oder in denen sie gelagert wird.

11. Verfahren nach einem der Ansprüche 1 bis 10, bei dem die für die Herstellung von Proteinen eingesetzte Stofffraktion zerkleinert wird, vorzugsweise bevor sie mit Wasser verdünnt wird.

12. Verfahren nach einem der Ansprüche 1 bis 11, bei dem die für die Herstellung von Proteinen eingesetzte Stofffraktion vor der Fermentation homogenisiert wird.

13. Verfahren nach einem der Ansprüche 1 bis 12, bei dem die für die Herstellung von Proteinen eingesetzte Stofffraktion durch Zugabe von Wasser mit einer Temperatur unter 30 °C verdünnt und gekühlt wird.

14. Verfahren nach einem der Ansprüche 1 bis 13, bei dem die zu fermentierende Stofffraktion vor dem Einspeisen in den Fermenter mit dem Inokulat gemischt wird und/oder das Inokulat gesondert von der zu fermentierenden Stofffraktion in den Fermenter eingespeist und in dem Fermenter mit der zu fermentierenden Stofffraktion gemischt wird.

15. Verfahren nach einem der Ansprüche 1 bis 14, bei dem der Fermenter diskontinuierlich, kontinuierlich oder im Fed-Batch-Prozess betrieben wird.

16. Verfahren nach einem der Ansprüche 1 bis 15, bei dem während der Fermentation die Fermentationsbrühe gerührt und/oder umgepumpt wird.

17. Verfahren nach einem der Ansprüche 1 bis 16, bei dem die Fermentation bei einer Temperatur zwischen 18°C und 30 °C, vorzugsweise zwischen 20°C bis 26°C, durchgeführt wird.

18. Verfahren nach einem der Ansprüche 1 bis 17, bei dem die Substratzusammensetzung bei der Fermentation so eingestellt wird, dass der C-Gehalt 4 bis 20 g/l, der N-Gehalt 0,5 bis 5 g/l und/oder das C/N-Verhältnis ca. 20 bis 40 beträgt.

19. Verfahren nach einem der Ansprüche 1 bis 18, bei dem das Proteine enthaltende Pilzmycel aus der bei der Fermentation gebildeten Pilzmaische abgetrennt wird.

20. Verfahren nach einem der Ansprüche 1 bis 19, bei dem das Pilzmycel durch Filtrierung, Dekantieren, Zentrifugieren oder Abscheiden von der Pilzmaische abgetrennt wird.

21. Verfahren nach einem der Ansprüche 1 bis 20, bei dem das Proteine enthaltende Pilzmycel als Endprodukt verwendet wird.

22. Verfahren nach einem der Ansprüche 1 bis 21, bei dem die Proteine und/oder Aromastoffe zumindest teilweise vom Pilzmycel abgetrennt werden, vorzugsweise durch Extraktion.

23. Verfahren nach einem der Ansprüche 1 bis 22, bei dem anfallende Reststoffe, ggfs. nach einer Aufbereitung, einem vorangehenden Verfahrensschritt zugeführt werden.

24. Verfahren nach einem der Ansprüche 1 bis 23, bei dem das Pilzmycel zu einem Lebensmittel, Nutraceutical, Genussmittel oder Arzneimittel verarbeitet wird.

25. Verfahren nach einem der Ansprüche 1 bis 24, bei dem die Proteine und/oder Aromastoffe aus dem Pilzmycel extrahiert und zu einem Lebensmittel, Nutraceutical, Genussmittel oder Arzneimittel verarbeitet werden.
